# EUROPEAN PATENT APPLICATION

(11) **EP 4 772 304 A1**
(43) Date of publication of application: **08.07.2026**
(21) Application number: 24944511.5
(22) Date of filing: 23.08.2024
(51) Int. Cl.: B23K 26/70, B23K 26/16

(54) **SPATTER ADHESION SUPPRESSION DEVICE FOR LASER PROCESSING MACHINE, LASER PROCESSING MACHINE, AND LASER PROCESSING METHOD**

(30) Priority: 28.06.2024 JP 2024104527
(71) Applicant: Yamazaki Mazak Corporation, Niwa-gun, Aichi 480-0197 (JP)
(72) Inventor: TAHARA, Makoto, Niwa-gun, Aichi 480-0197 (JP); SANO, Tadakazu, Niwa-gun, Aichi 480-0197 (JP); ICHINO, Kentaro, Niwa-gun, Aichi 480-0197 (JP); NAKANISHI, Hirofumi, Niwa-gun, Aichi 480-0197 (JP); NISHIO, Tomohiro, Niwa-gun, Aichi 480-0197 (JP); NISHIDE, Keisuke, Niwa-gun, Aichi 480-0197 (JP); HITANI, Taichi, Niwa-gun, Aichi 480-0197 (JP); IWASE, Tsuyoshi, Niwa-gun, Aichi 480-0197 (JP)
(74) Representative: TBK
(86) International application number: PCT/JP2024/029966
(87) International publication number: WO 2026/004149

(57) **Abstract**

A spatter adhesion inhibitor of a laser beam machine includes a spatter guard, a blaster, and an ejector. The spatter guard includes a leading end portion that is insertable into a pipe and that receives spatter generated as a result of irradiation of a laser beam to the pipe. The blaster blasts fluid to a leading end portion of the spatter guard. The ejector ejects a spatter adhesion inhibiting agent to the leading end portion of the spatter guard and an inner surface of the pipe.

## Description

### Technical Field

The present invention relates to a spatter adhesion inhibitor of a laser beam machine, a laser beam machine, and a laser beam machining method.

### Background Art

A technique is known for inhibiting adhesion of molten metal debris to the inner surface of a pipe-shaped workpiece during laser beam machining of the pipe-shaped workpiece.

As a related technique, Patent Literature 1 discloses a mechanism for removing molten metal debris in a laser beam machining apparatus. The mechanism for removing molten metal debris recited in Patent Literature 1 includes a receiving member inserted into the pipe-shaped workpiece. The receiving member receives molten metal debris when the pipe-shaped workpiece is cut.

### Citation List

### Patent Literature

PTL1: CD-ROM of JP H3-88410 U (published as JP H5-39783 U).

### Summary of Invention

### Technical Problem

It is an object of the present invention to provide a spatter adhesion inhibitor of a laser beam machine, a laser beam machine, and a laser beam machining method such that during laser beam machining of a pipe, adhesion of spatter to the inner surface of the pipe is effectively inhibited while accumulation of spatter on a spatter guard is inhibited.

### Solution to Problem

An embodiment of the present invention relates to a spatter adhesion inhibitor of a laser beam machine, a laser beam machine, and a laser beam machining method, as described below.
(1) A spatter adhesion inhibitor of a laser beam machine includes a spatter guard, a blaster, and an ejector. The spatter guard includes a leading end portion that is insertable into a pipe and that is configured to receive spatter generated as a result of irradiation of a laser beam to the pipe. The blaster is configured to blast fluid to the leading end portion of the spatter guard. The ejector is configured to eject a spatter adhesion inhibiting agent to the leading end portion of the spatter guard and an inner surface of the pipe.
(2) A laser beam machine includes a support, a rotational driver, a laser irradiator, a mover, a spatter adhesion inhibitor, and a controller. The support is configured to support a pipe. The rotational driver is configured to rotate the pipe about a first axis. The laser irradiator includes a laser head configured to irradiate a laser beam to the pipe. The mover is configured to move the laser head relative to the pipe. The controller is configured to control the rotational driver, the laser irradiator, the mover, and the spatter adhesion inhibitor. The spatter adhesion inhibitor includes a spatter guard, a spatter guard mover, a blaster, and an ejector. The spatter guard includes a leading end portion that is insertable into the pipe through a first end portion of the pipe and that is configured to receive spatter generated as a result of irradiation of the laser beam to the pipe. The spatter guard mover is configured to move the spatter guard. The blaster is configured to blast fluid to the leading end portion of the spatter guard. The ejector is configured to eject a spatter adhesion inhibiting agent to the leading end portion of the spatter guard and an inner surface of the pipe.
(3) A laser beam machining method includes a step of ejecting a spatter adhesion inhibiting agent to a leading end portion of a spatter guard and an inner surface of a pipe. The laser beam machining method also includes a step of radiating a laser beam to the pipe in a state in which the leading end portion of the spatter guard is inserted in the pipe. The laser beam machining method also includes a step of blowing off spatter, generated as a result of irradiation of the laser beam to the pipe, from the leading end portion of the spatter guard to an inner surface of the pipe. The step of blowing off the spatter is performed by blasting fluid from a blaster of the spatter guard to the leading end portion of the spatter guard.

### Effects of Invention

The present invention provides a spatter adhesion inhibitor of a laser beam machine, a laser beam machine, and a laser beam machining method such that during laser beam machining of a pipe, adhesion of spatter to the inner surface of the pipe is effectively inhibited while accumulation of spatter on a spatter guard is inhibited.

### Brief Description of Drawings

[FIG. 1] FIG. 1 is a cross-sectional view of an ejector, schematically illustrating a state in which the ejector is ejecting a spatter adhesion inhibiting agent to a leading end portion of a spatter guard and an inner surface of a pipe.
[FIG. 2] FIG. 2 is a cross-sectional view of the leading end portion of the spatter guard, schematically illustrating a state in which, during laser beam machining, the spatter is being blown off from the leading end portion of the spatter guard to the inner surface of the pipe.
[FIG. 3] FIG. 3 is an enlarged view of the area surrounded by circle A3 illustrated in FIG. 2.
[FIG. 4] FIG. 4 is a schematic illustration of a state in which an ejector according to a first example is ejecting the spatter adhesion inhibiting agent to the leading end portion of the spatter guard and the inner surface of the pipe.
[FIG. 5] FIG. 5 is a schematic illustration of a state in which, during the laser beam machining, the spatter is being blown off from the leading end portion of the spatter guard to the inner surface of the pipe.
[FIG. 6] FIG. 6 is a schematic illustration of a state in which, during the laser beam machining, the spatter is being blown off from the leading end portion of the spatter guard to the inner surface of the pipe.
[FIG. 7] FIG. 7 is a schematic illustration of a state in which an ejector according to a second example is ejecting the spatter adhesion inhibiting agent to the leading end portion of the spatter guard and the inner surface of the pipe.
[FIG. 8] FIG. 8 is a schematic illustration of a state in which, during the laser beam machining, the spatter is being blown off from the leading end portion of the spatter guard to the inner surface of the pipe.
[FIG. 9] FIG. 9 is a cross-sectional view of the spatter guard, schematically illustrating a state in which the spatter guard is connected to a connector through a first tube.
[FIG. 10] FIG. 10 is a cross-sectional view of a second spatter guard, schematically illustrating a state in which the second spatter guard is connected to the connector through another tube.
[FIG. 11] FIG. 11 is a schematic perspective view of the pipe and the spatter guard.
[FIG. 12] FIG. 12 is a cross-sectional view cut along a plane indicated by the arrow A2-A2 illustrated in FIG. 2.
[FIG. 13] FIG. 13 is a schematic perspective view of the pipe and the spatter guard.
[FIG. 14] FIG. 14 is a schematic perspective view of the pipe and the spatter guard.
[FIG. 15] FIG. 15 is a cross-sectional view cut along a plane indicated by the arrow A1-A1 illustrated in FIG. 1.
[FIG. 16] FIG. 16 is a front view of the ejector, schematically illustrating a state in which the ejector is ejecting the spatter adhesion inhibiting agent to the leading end portion of the spatter guard and the inner surface of the pipe.
[FIG. 17] FIG. 17 is a schematic cross-sectional view of a blaster according to a modification.
[FIG. 18] FIG. 18 is a partially enlarged view of FIG. 16.
[FIG. 19] FIG. 19 is a front view of the leading end portion of the spatter guard, schematically illustrating a state in which, during the laser beam machining, the spatter is being blown off from the leading end portion of the spatter guard to the inner surface of the pipe.
[FIG. 20] FIG. 20 is a front view of the pipe, schematically illustrating a state in which, during the laser beam machining, the spatter in the pipe is being extracted by an extractor.
[FIG. 21] FIG. 21 is a front view of the pipe, schematically illustrating a state in which, during the laser beam machining, the spatter in the pipe is being extracted by the extractor.
[FIG. 22] FIG. 22 is a front view of the leading end portion of the spatter guard, schematically illustrating a state in which the leading end portion of the spatter guard is being cleaned by a cleaner.
[FIG. 23] FIG. 23 is a schematic illustration of a spatter adhesion inhibitor, according to a second embodiment, of a laser beam machine.
[FIG. 24] FIG. 24 is a schematic illustration of the spatter adhesion inhibitor, according to the second embodiment, of the laser beam machine.
[FIG. 25] FIG. 25 is a cross-sectional view of the leading end portion of the spatter guard, schematically illustrating a state in which, during the laser beam machining, the spatter is being blown off from the leading end portion of the spatter guard to the inner surface of the pipe.
[FIG. 26] FIG. 26 is a schematic illustration of a spatter adhesion inhibitor, according to a third embodiment, of a laser beam machine.
[FIG. 27] FIG. 27 is a schematic illustration of a spatter adhesion inhibitor, according to a first modification of the third embodiment, of a laser beam machine.
[FIG. 28] FIG. 28 is a schematic front view of a laser beam machine according to a fourth embodiment.
[FIG. 29] FIG. 29 is a cross-sectional view of the ejector, schematically illustrating a state in which the ejector is ejecting the spatter adhesion inhibiting agent to the leading end portion of the spatter guard and the inner surface of the pipe.
[FIG. 30] FIG. 30 is a schematic front view of the laser beam machine according to the fourth embodiment.
[FIG. 31] FIG. 31 is a schematic front view of the laser beam machine according to the fourth embodiment.
[FIG. 32] FIG. 32 is a schematic illustration of a state in which a controller is capable of controlling a plurality of control target instruments.
[FIG. 33] FIG. 33 is a flowchart of an example of a laser beam machining method according to a fifth embodiment.

### Description of Embodiments

By referring to the accompanying drawings, description will be made with regard to: a spatter adhesion inhibitor 2, according to one embodiment, of a laser beam machine; a laser beam machine 1 according to the one embodiment; and a laser beam machining method according to the one embodiment. It is noted that in the following description of the embodiments, identical reference numerals are used to denote identical portions, members, or components having identical functions, and redundant description of identical portions, members, or components will be eliminated or minimized.

### (Definition of Terms)

In this specification, one of two end portions of a pipe P in which a spatter guard 30 is insertable is defined as first end portion Pa. Also in this specification, the other of the two end portions of the pipe P opposite to the first end portion Pa is defined as second end portion Pb.

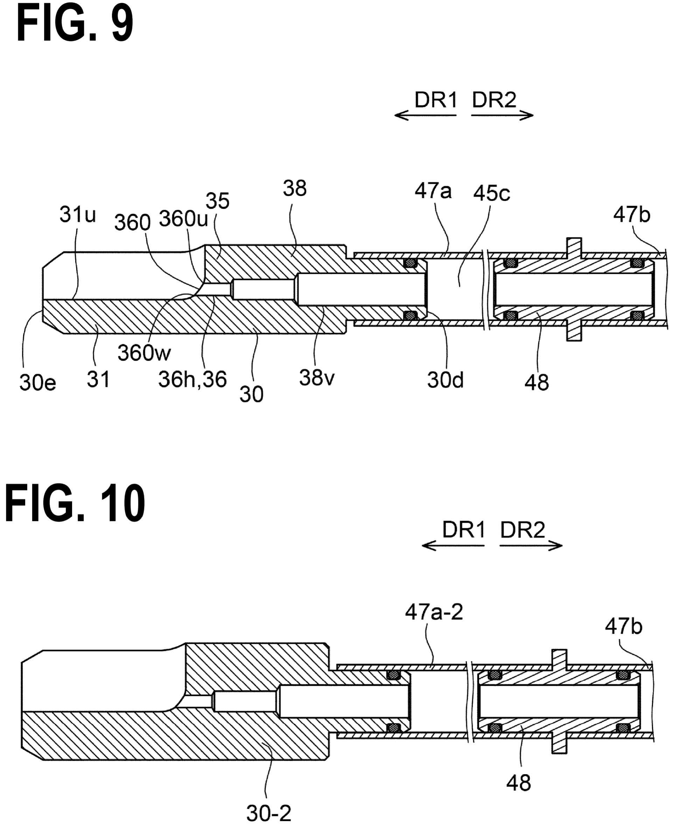

As exemplified in FIG. 9, in this specification, the direction from a base end 30d of the spatter guard 30 toward a leading end 30e of the spatter guard 30 is defined as the first direction *DR1*, and the direction from a leading end 30e of the spatter guard 30 toward the base end 30d of the spatter guard 30 is defined as second direction *DR2.*

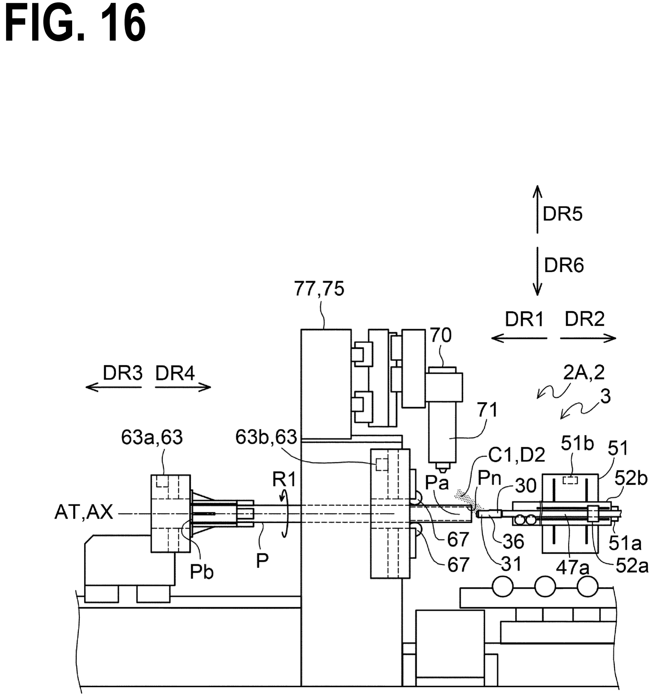

In this specification, the direction in which a leading end portion 31 of the spatter guard 30 is inserted in the pipe P is defined as third direction *DR3,* and the direction opposite to the third direction *DR3* is defined as fourth direction *DR4.* In the example illustrated in FIG. 16, the third direction *DR3* is a direction identical to the direction from the first end portion Pa of the pipe P toward the second end portion Pb of the pipe P, and the fourth direction *DR4* is a direction identical to the direction from the second end portion Pb of the pipe P toward the first end portion Pa of the pipe P. Also in the example illustrated in FIG. 16, the third direction *DR3* is a direction identical to the first direction *DR1*.

In this specification, the vertically upward direction is defined as fifth direction *DR5*, and the vertically downward direction is defined as sixth direction *DR6.*

### (First Embodiment)

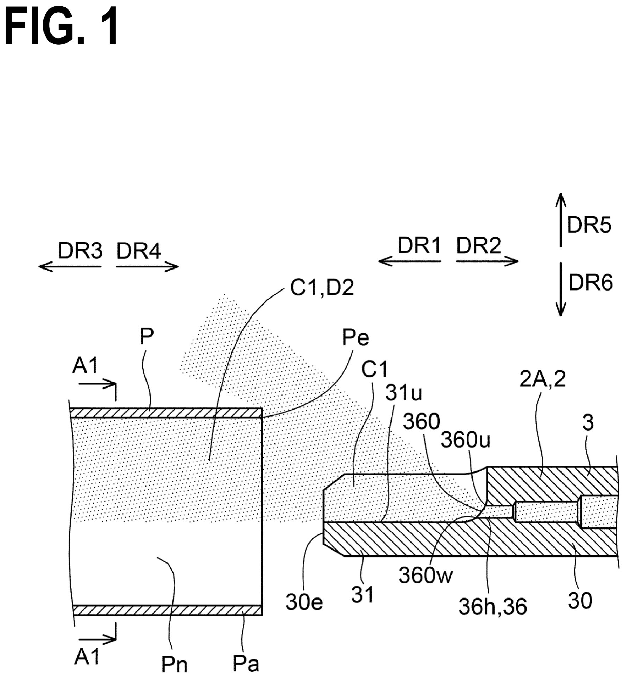

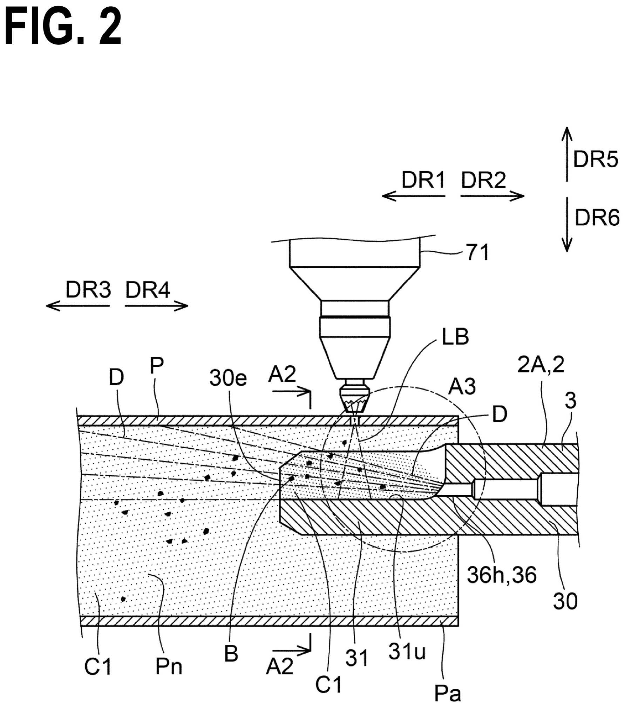

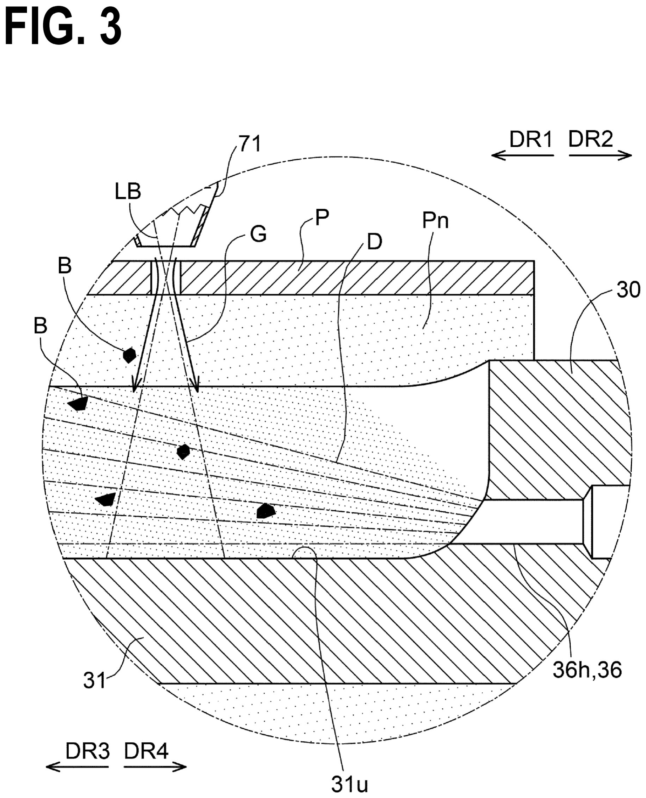

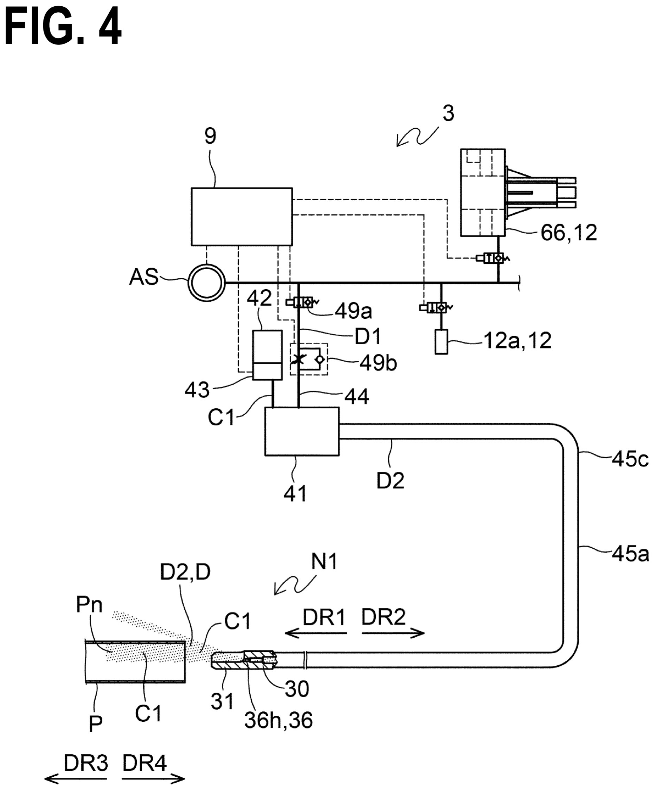

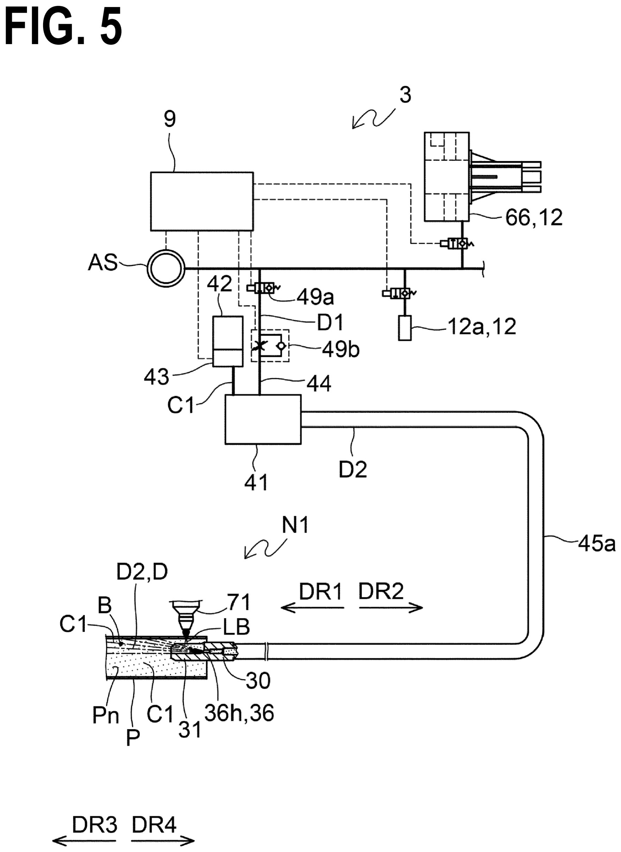

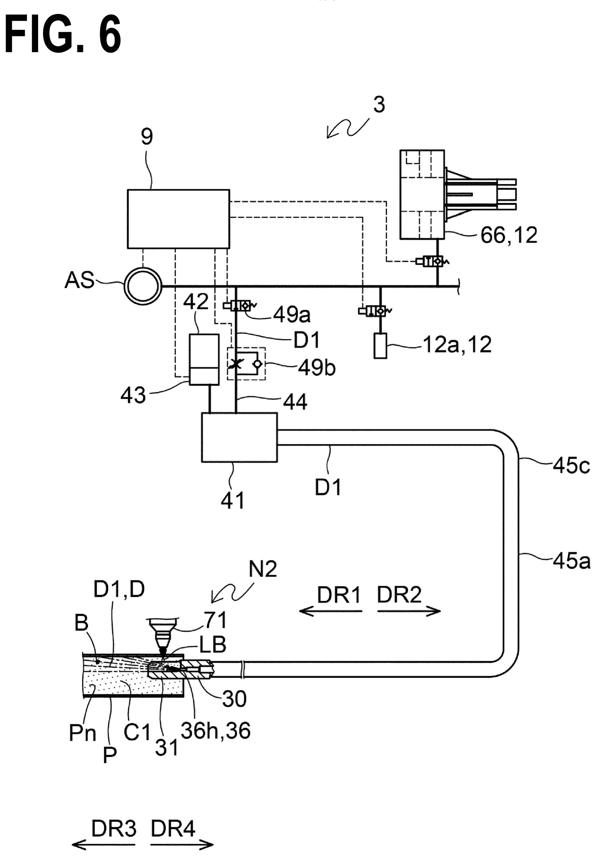

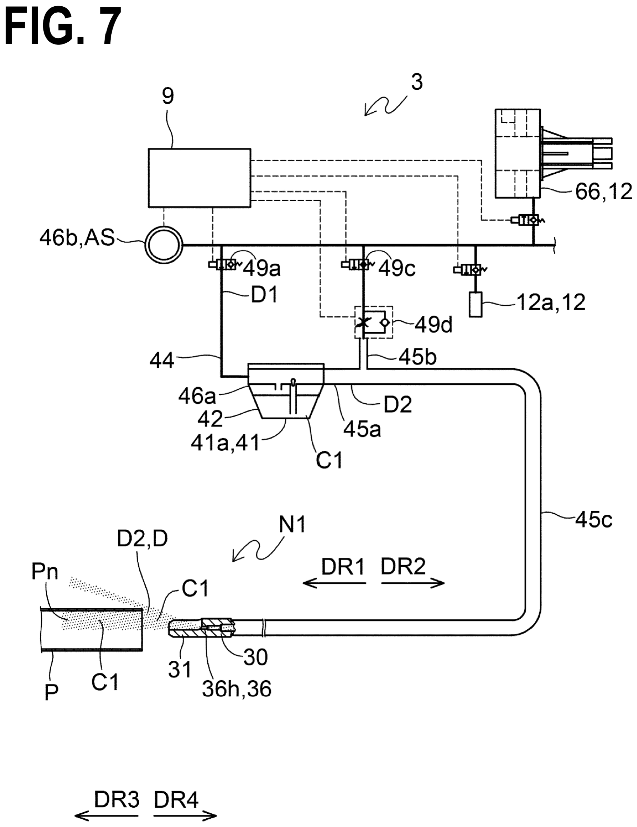

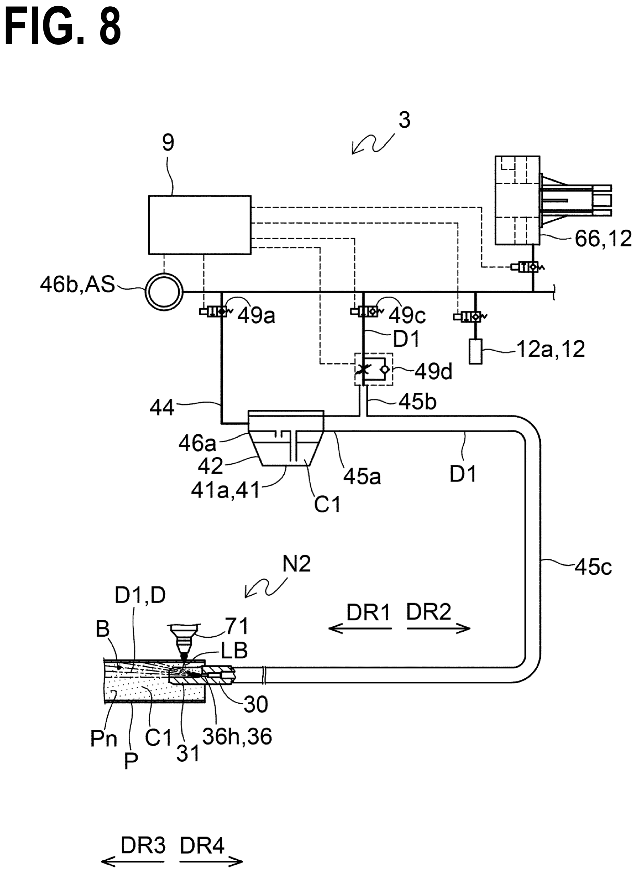

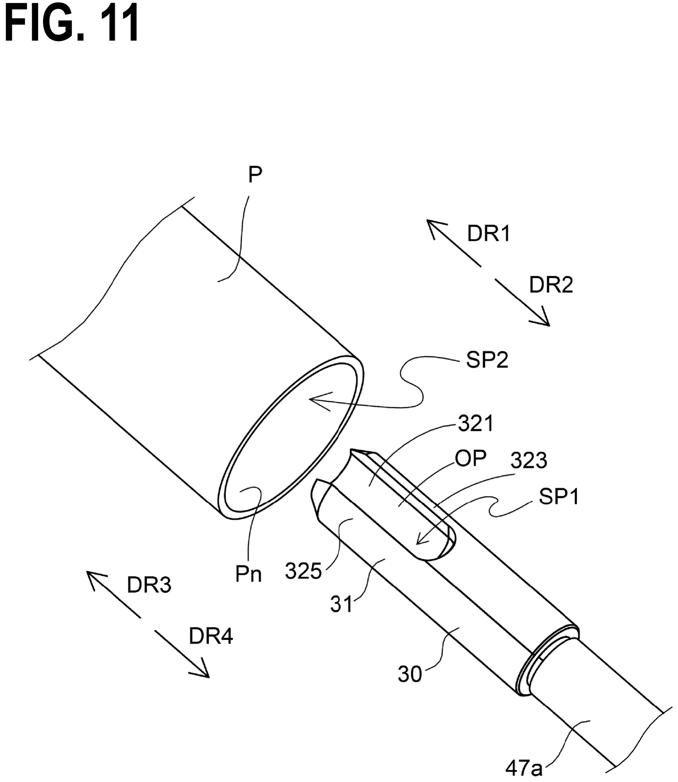

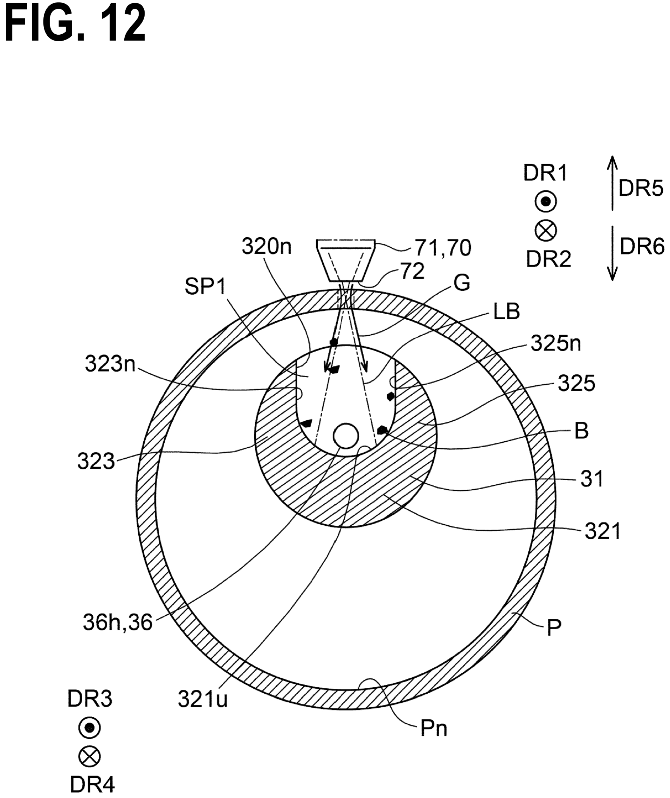

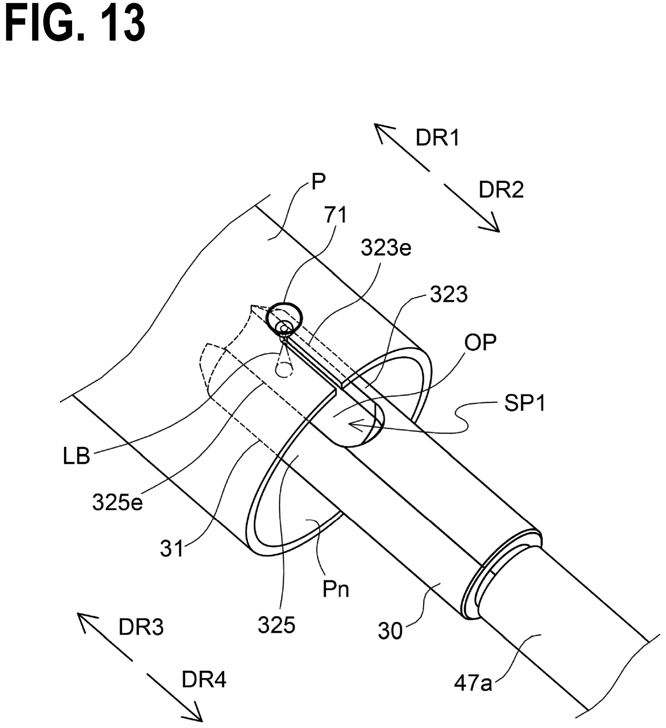

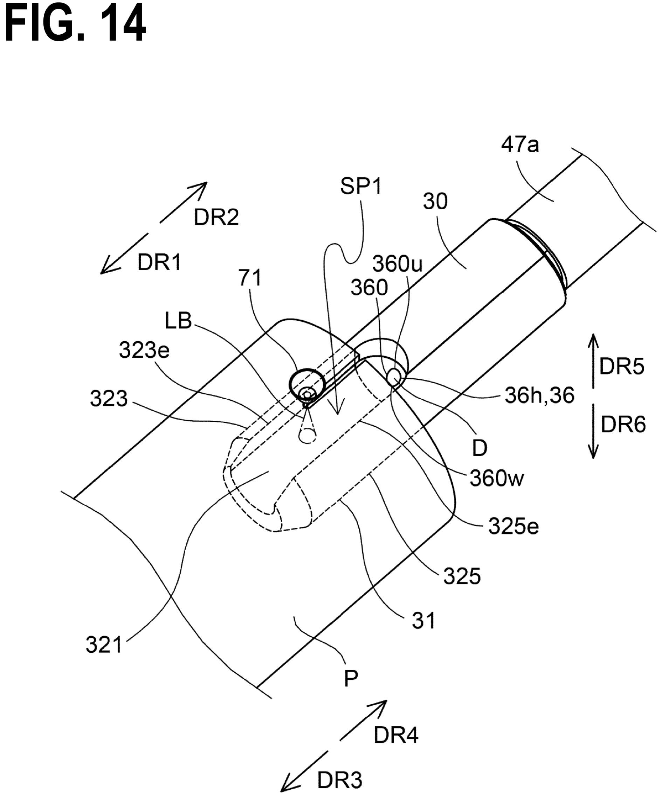

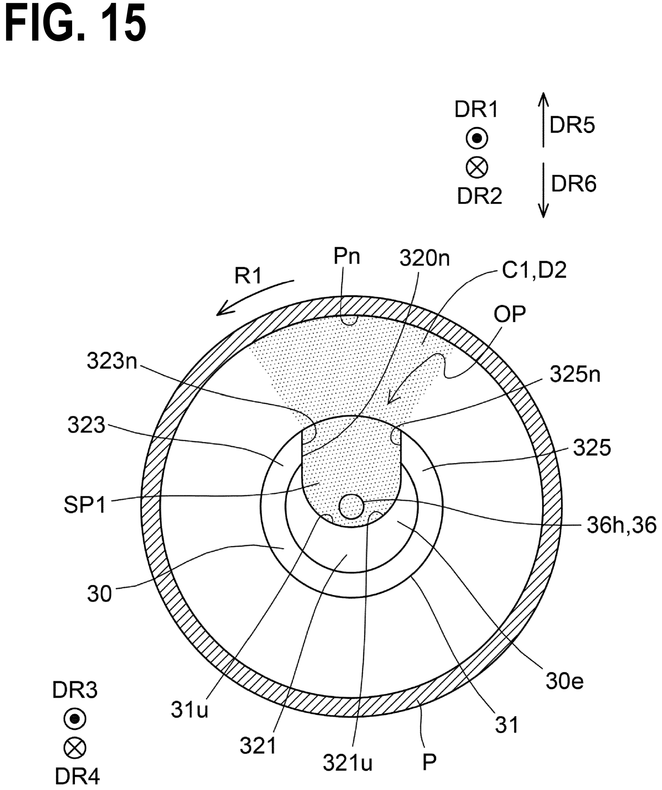

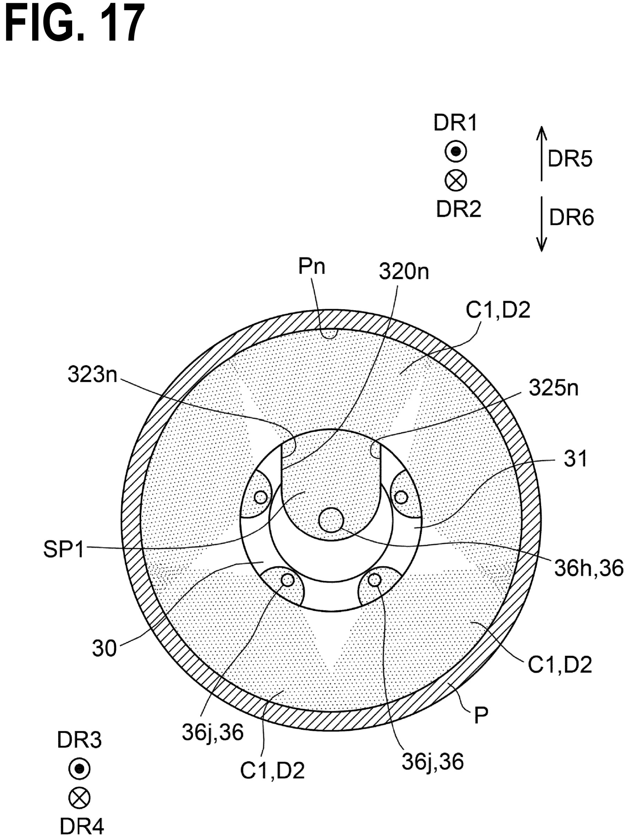

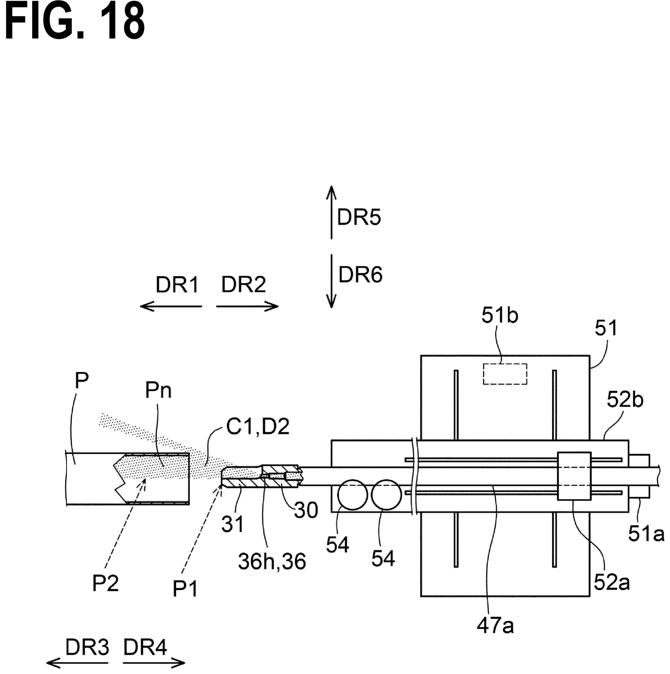

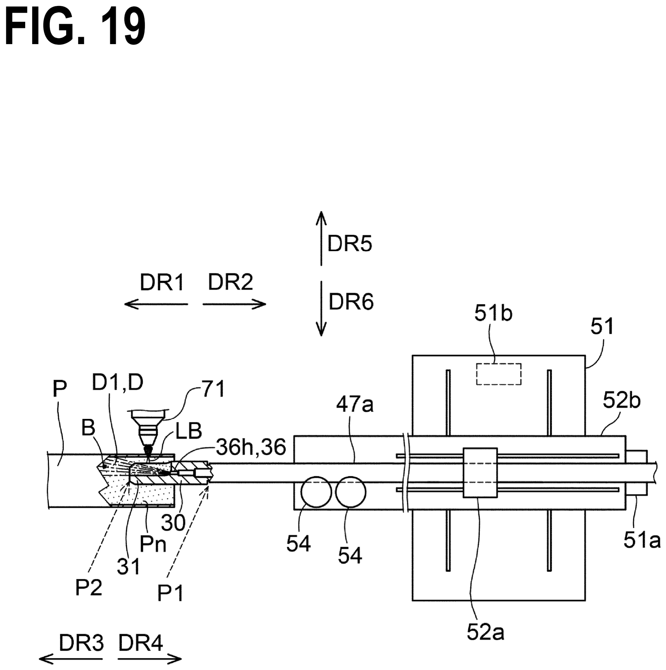

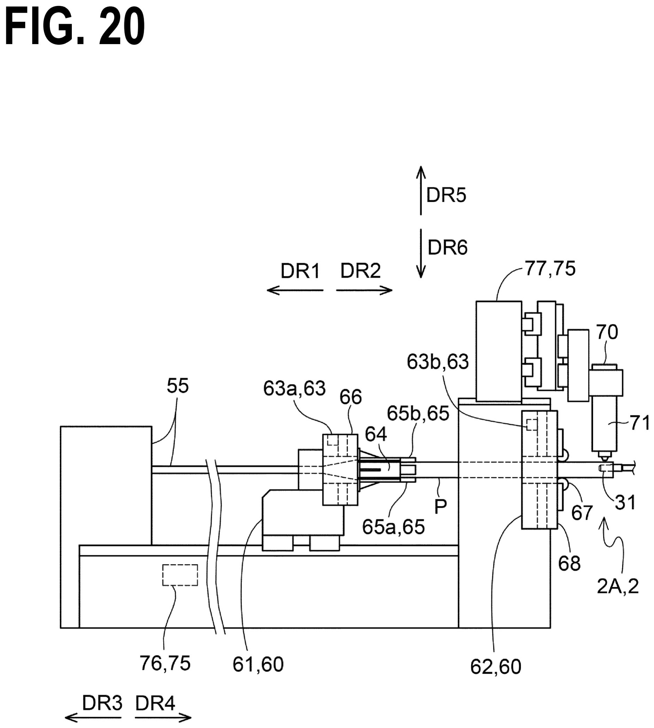

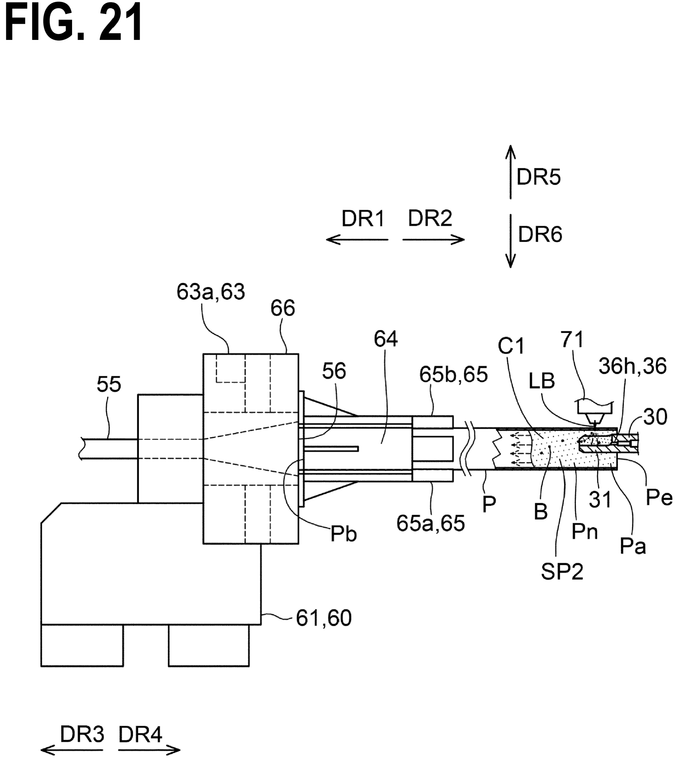

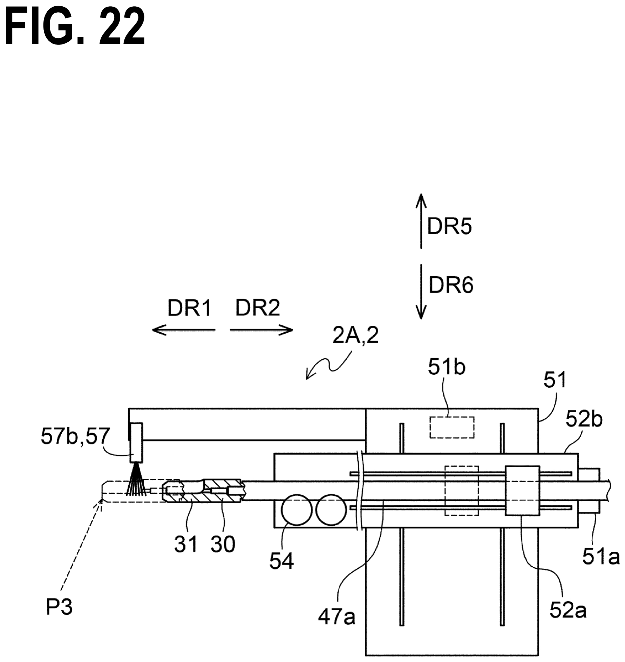

By referring to FIGs. 1 to 22, a spatter adhesion inhibitor 2A, according to the first embodiment, of a laser beam machine will be described. FIG. 1 is a cross-sectional view of an ejector 3, schematically illustrating a state in which the ejector 3 is ejecting a spatter adhesion inhibiting agent C1 to the leading end portion 31 of the spatter guard 30 and an inner surface Pn of the pipe P. FIG. 2 is a cross-sectional view of the leading end portion 31 of the spatter guard 30, schematically illustrating a state in which during laser beam machining, spatter B is being blown off the leading end portion 31 of the spatter guard 30 to the inner surface Pn of the pipe P. FIG. 3 is an enlarged view of the area surrounded by circle A3 illustrated in FIG. 2. FIG. 4 is a schematic illustration of a state in which the ejector 3 according to the first example is ejecting the spatter adhesion inhibiting agent C1 to the leading end portion 31 of the spatter guard 30 and the inner surface Pn of the pipe P. FIGs. 5 and 6 each are a schematic illustration of a state in which, during the laser beam machining, the spatter B is being blown off the leading end portion 31 of the spatter guard 30 to the inner surface Pn of the pipe P. FIG. 7 is a schematic illustration of a state in which the ejector 3 according to the first example is ejecting the spatter adhesion inhibiting agent C1 to the leading end portion 31 of the spatter guard 30 and the inner surface Pn of the pipe P. FIG. 8 is a schematic illustration of a state in which during the laser beam machining, the spatter B is being blown off the leading end portion 31 of the spatter guard 30 to the inner surface Pn of the pipe P. FIG. 9 is a cross-sectional view of the spatter guard 30, schematically illustrating a state in which the spatter guard 30 is connected to a connector 48 through a first tube 47a. FIG. 10 is a cross-sectional view of a second spatter guard 30-2, schematically illustrating a state in which the second spatter guard 30-2 is connected to the connector 48 through another the tube 47a-2. FIG. 11 is a schematic perspective view of the pipe P and the spatter guard 30. FIG. 12 is a cross-sectional view cut along a plane indicated by the arrow A2-A2 illustrated in FIG. 2. FIGs. 13 and 14 each are a schematic perspective view of the pipe P and the spatter guard 30. FIG. 15 is a cross-sectional view cut along a plane indicated by the arrow A1-A1 illustrated in FIG. 1. FIG. 16 is a front view of the ejector 3, schematically illustrating a state in which the ejector 3 is ejecting the spatter adhesion inhibiting agent C1 to the leading end portion 31 of the spatter guard 30 and the inner surface Pn of the pipe P. FIG. 17 is a schematic cross-sectional view of a blaster 36 according to a modification. FIG. 18 is a partially enlarged view of FIG. 16. FIG. 19 is a front view of the leading end portion 31 of the spatter guard 30, schematically illustrating a state in which, during the laser beam machining, the spatter B is being blown off the leading end portion 31 of the spatter guard 30 to the inner surface Pn of the pipe P. FIGs. 20 and 21 each are a front view of the pipe P, schematically illustrating a state in which, during the laser beam machining, the spatter in the pipe P is being extracted by an extractor 55. FIG. 22 is a front view of the leading end portion 31 of the spatter guard 30, schematically illustrating a state in which the leading end portion 31 of the spatter guard 30 is being cleaned by a cleaner 57. It is to be noted that in FIGs. 2, 3, 5, 6, 8, and 19, a state in which fluid D is being blasted from the blaster 36 is indicated by a plurality of radial, single-dashed lines.

As exemplified in FIG. 1, the spatter adhesion inhibitor 2A of the laser beam machine includes the spatter guard 30, the blaster 36, and the ejector 3.

As exemplified in FIG. 2, the spatter guard 30 includes the leading end portion 31. The leading end portion 31 is insertable in the pipe P. In the example illustrated in FIG. 2, the leading end portion 31 of the spatter guard 30 receives the spatter B. The spatter B is generated as a result of irradiation of a laser beam LB to the pipe P. The spatter B is a mass of metal generated as a result of irradiation of the laser beam LB to the pipe P. In the example illustrated in FIG. 2, the spatter guard 30 receives the spatter B (for example, the spatter B in molten state) to inhibit adhesion of the spatter B (for example, the spatter B in molten state) to the inner surface Pn of the pipe P.

In this specification, the pipe P may have a circular cross-sectional shape, a rectangular cross-sectional shape (for example, approximately square approximately rectangular cross-sectional shape), or any other cross-sectional shape on a plane perpendicular to the longitudinal direction of the pipe P. In other words, the pipe P machined by the laser beam LB (in other words, the pipe P as a to-be-worked object) may be a circular pipe, a rectangular pipe, or any other pipe.

In the example illustrated in FIG. 2, the leading end portion 31 of the spatter guard 30 is inserted in the pipe P. In the example illustrated in FIG. 3, the leading end portion 31 of the spatter guard 30 is located on an axis of the laser beam LB emitted from a laser head 71 (in other words, the leading end portion 31 is located on an optical axis of the laser beam LB). With this configuration, the leading end portion 31 of the spatter guard 30 effectively inhibits adhesion of the spatter B, which is generated as a result of irradiation of the laser beam to the pipe P, to the inner surface Pn of the pipe P (see FIG. 2).

As exemplified in FIG. 2, the blaster 36 blasts the fluid D to the leading end portion 31 of the spatter guard 30. More specifically, the blaster 36 blasts the fluid D to the leading end portion 31 of the spatter guard 30 to blow off the spatter B from the leading end portion 31 of the spatter guard 30 to the inner surface Pn of the pipe P. The fluid D is a blow-off fluid for blowing off the spatter B. The fluid D (in other words, the blow-off fluid) may contain the spatter adhesion inhibiting agent C1 or may not necessarily contain the spatter adhesion inhibiting agent C1.

In the example illustrated in FIG. 1, the ejector 3 ejects the spatter adhesion inhibiting agent C1 to the leading end portion 31 of the spatter guard 30 and the inner surface Pn of the pipe P. As exemplified in FIG. 1, to the ejector 3, which ejects the spatter adhesion inhibiting agent C1 to the leading end portion 31 of the spatter guard 30, may be a device identical to the ejector that ejects the spatter adhesion inhibiting agent C1 to the inner surface Pn of the pipe P. Alternatively, the ejector that ejects the spatter adhesion inhibiting agent to the leading end portion 31 of the spatter guard 30 may be a device different from the ejector that ejects the spatter adhesion inhibiting agent to the inner surface Pn of the pipe P. The spatter adhesion inhibiting agent C1 ejected to the leading end portion 31 of the spatter guard 30 may be identical in component to the spatter adhesion inhibiting agent C1 ejected to the inner surface Pn of the pipe P. Alternatively, the spatter adhesion inhibiting agent C1 ejected to the leading end portion 31 of the spatter guard 30 may be different in component from the spatter adhesion inhibiting agent ejected to the inner surface Pn of the pipe P.

The spatter adhesion inhibitor 2A, according to the first embodiment, of the laser beam machine includes the spatter guard 30. The spatter guard 30 includes the leading end portion 31, which is insertable in the pipe P (see FIG. 2). The leading end portion 31 of the spatter guard 30 inhibits adhesion of the spatter B scattering from the pipe P during the laser beam machining to the inner surface Pn of the pipe P.

The spatter adhesion inhibitor 2A, according to the first embodiment, of the laser beam machine includes the blaster 36. The blaster 36 blasts the fluid D (in other words, the blow-off fluid) to the leading end portion 31 of the spatter guard 30 (see FIG. 2). The fluid D ejected to the leading end portion 31 of the spatter guard 30 blows the spatter B off the leading end portion 31. This configuration inhibits accumulation of the spatter B on the leading end portion 31 of the spatter guard 30. This configuration, in turn, prevents occurrence of the situation in which the leading end portion 31 can not sufficiently receive the spatter B, which can otherwise be caused by accumulation of the spatter B on the leading end portion 31 of the spatter guard 30. This configuration, in turn, prevents degradation of the spatter guard 30's effect of inhibiting adhesion of the spatter B to the inner surface Pn of the pipe P, which can otherwise be caused by the situation in which the leading end portion 31 can not sufficiently receive the spatter B.

In the example illustrated in FIG. 2, the spatter guard 30 receives the spatter B at the leading end portion 31. In this respect, the distance between the received spatter B and the leading end 30e of the spatter guard 30 is not substantial. This enables the fluid D blasted from the blaster 36 to easily blow off the spatter B to outside the spatter guard 30.

The spatter adhesion inhibitor 2A, according to the first embodiment, of the laser beam machine includes the ejector 3. The ejector 3 ejects the spatter adhesion inhibiting agent C1 to the leading end portion 31 of the spatter guard 30 and the inner surface Pn of the pipe P (see FIG. 1).

Since the spatter adhesion inhibiting agent C1 is ejected to the leading end portion 31 of the spatter guard 30, adhesion of the spatter B scattering from the pipe P during laser beam machining to the leading end portion 31 of the spatter guard 30 is inhibited. More specifically, even though the spatter B scattering from the pipe P is received by the leading end portion 31 of the spatter guard 30, the spatter adhesion inhibiting agent C1 inhibits adhesion of the spatter B to the leading end portion 31 when the spatter B is received by the leading end portion 31. Since adhesion of the spatter B to the leading end portion 31 of the spatter guard 30 is inhibited, the spatter B can be easily blown off to outside the spatter guard 30 from the leading end portion 31 of the spatter guard 30 using the fluid D blasted from the blaster 36.

In the example illustrated in FIG. 2, the spatter adhesion inhibiting agent C1 is applied to the inner surface Pn of the pipe P. This configuration prevents the spatter B that is being blown off the leading end portion 31 of the spatter guard 30 to the inner surface Pn of the pipe P from adhering to the inner surface Pn of the pipe P. More specifically, even though the spatter B that is being blown off the leading end portion 31 of the spatter guard 30 is received by the inner surface Pn of the pipe P, the spatter adhesion inhibiting agent C1 inhibits adhesion of the spatter B to the inner surface Pn when the spatter B is received by the inner surface Pn.

The spatter guard 30 is a member that prevents the spatter B from reaching the inner surface Pn of the pipe P. In view of this nature of the spatter guard 30, it is not conventional practice to blow the spatter B off the spatter guard 30 to the inner surface Pn of the pipe P. In this case, although adhesion of the spatter B to the inner surface Pn of the pipe-shaped workpiece is inhibited, accumulation of the spatter B on the spatter guard 30 is inevitable. In the examples illustrated in FIGs. 1 and 2, the spatter adhesion inhibiting agent C1 is ejected to the leading end portion 31 of the spatter guard 30 and the inner surface Pn of the pipe P, and the spatter B is blown off the leading end portion 31 of the spatter guard 30 to the inner surface Pn of the pipe P. This configuration inhibits accumulation of the spatter B on the spatter guard 30 while at the same time inhibiting adhesion of the spatter B to the inner surface Pn of the pipe P.

### (Optional Configurations)

Next, by referring to FIGs. 1 to 22, description will be made with regard to optional configurations employable in the first embodiment (or in the second embodiment, described later, or in the third embodiment, described later, or in the fourth embodiment, described later, or in the fifth embodiment, described later).

### (Spatter Adhesion Inhibiting Agent C1)

In this specification, an example of the spatter adhesion inhibiting agent C1 is oil. The spatter adhesion inhibiting agent C1 may be ejected to the leading end portion 31 of the spatter guard 30 and the inner surface Pn of the pipe P in the form of oil air. In the oil air, the oil is transferred by the air. In other words, in the oil air, the air serves as transfer fluid that transfers the oil. In a case that the spatter adhesion inhibiting agent C1 is oil, the spatter adhesion inhibiting agent C1 is obtainable at low cost. Also in this case, the spatter adhesion inhibiting agent C1 can be easily handled. In a case that the spatter adhesion inhibiting agent C1 is ejected to the leading end portion 31 of the spatter guard 30 and the inner surface Pn of the pipe P in the form of oil air, it is easy to apply the oil over a wide range of the leading end portion 31 of the spatter guard 30 and a wide range of the inner surface Pn of the pipe P.

Any known spatter adhesion inhibiting agent may be employed as the spatter adhesion inhibiting agent C1 ejected to the leading end portion 31 of the spatter guard 30 and the inner surface Pn of the pipe P. The spatter adhesion inhibiting agent C1 may be a water soluble spatter adhesion inhibiting agent (for example, a water solution-type spatter adhesion inhibiting agent containing water soluble resin, water soluble polymer, alcohol, and/or surfactant). The spatter adhesion inhibiting agent C1 may be a water insoluble spatter adhesion inhibiting agent (for example, an oil-based spatter adhesion inhibiting agent). The oil-based spatter adhesion inhibiting agent may contain an organic solvent and a substance soluble in the organic solvent. Also in this specification, the spatter adhesion inhibiting agent C1 may be a liquid spatter adhesion inhibiting agent or a powdery spatter adhesion inhibiting agent. The spatter adhesion inhibiting agent C1 in liquid form may contain powder or may not necessarily contain powder.

The pipe P is made into a product, and before the product is shipped, the spatter adhesion inhibiting agent C1 that was ejected to the inner surface Pn of the pipe P may be removed from the product in a cleaning step. In a case that no problem occurs if the spatter adhesion inhibiting agent C1 is adhered to the inner surface of the product made from the pipe P, the cleaning step may be omitted.

### (Blaster 36)

In the example illustrated in FIG. 1, the ejector 3 includes the blaster 36. The blaster 36 is capable of ejecting the spatter adhesion inhibiting agent C1 (for example, oil) to the leading end portion 31 of the spatter guard 30 and the inner surface Pn of the pipe P. This configuration reduces the space occupied by the spatter adhesion inhibitor 2A as compared with a case that the blaster that ejects the spatter adhesion inhibiting agent C1 is provided at a place different from the place where the blaster 36 that blasts the fluid D (in other words, spatter blow-off fluid) is provided. The above configuration also reduces the production cost of the spatter adhesion inhibitor 2A. In the example illustrated in FIG. 1, the blaster 36 includes a blast hole 36h. Through the blast hole 36h, a fluid mixture D2 is sprayed. The fluid mixture D2 contains gas and the spatter adhesion inhibiting agent C1 (for example, oil).

### (Ejector 3)

In the example illustrated in FIG. 4, the ejector 3 includes a first fluid passage 45a. Through the first fluid passage 45a, the fluid mixture D2, which contains gas and the spatter adhesion inhibiting agent C1, is supplied to the blaster 36 (more specifically, the blast hole 36h). The ejector 3 is capable of ejecting the fluid mixture D2 from the blaster 36 (more specifically, the blast hole 36h) to the inner surface Pn of the pipe P. In the examples illustrated in FIGs. 4 and 5, the blaster 36 is capable of ejecting the fluid mixture D2 (see FIG. 4), and the blaster 36 is capable of blasting the fluid D (in other words, the blow-off fluid) (see FIG. 5). This configuration reduces the space occupied by the spatter adhesion inhibitor 2A as compared with a case that the blaster that ejects the fluid mixture D2 is provided at a place different from the place where the blaster 36 blasts the spatter blow-off fluid is provided. In the examples illustrated in FIGs. 4 and 5, the blast hole 36h through which the fluid mixture D2 is blasted is identical to the blast hole 36h through which the spatter blow-off fluid is blasted. Alternatively, the blaster 36 may include the blast hole 36h through which the fluid mixture D2 is blasted and another blast hole through which the spatter blow-off fluid is blasted.

In the example illustrated in FIG. 4, the ejector 3 is capable of adjusting the ratio of the spatter adhesion inhibiting agent C1 (for example, oil) to the fluid mixture D2 blasted from the blaster 36. This configuration enables the ejector 3 to eject a fluid mixture D2 that is high in spatter adhesion inhibiting agent C1 content to the leading end portion 31 of the spatter guard 30 and the inner surface Pn of the pipe P (see FIG. 4). The above configuration enables the ejector 3 to blow the spatter B off the leading end portion 31 of the spatter guard 30 to the inner surface Pn of the pipe P using a fluid D that is low in spatter adhesion inhibiting agent C1 content or a fluid D that is zero in spatter adhesion inhibiting agent C1 content (see FIG. 5 or 6).

In the example illustrated in FIG. 4, the ejector 3 includes a mixer 41. The mixer 41 mixes gas D1 (for example, air) and the spatter adhesion inhibiting agent C1 (for example, oil). The ejector 3 adjusts the ratio between the flow rate of the gas D1 (for example, air) supplied to the mixer 41 and the flow rate of the spatter adhesion inhibiting agent C1 (for example, oil) supplied to the mixer 41. In this manner, the ejector 3 adjusts the ratio of the spatter adhesion inhibiting agent C1 (for example, oil) to the fluid D blasted from the blaster 36.

In the example illustrated in FIG. 4, the ejector 3 includes an air source AS (for example, an air compressor), the mixer 41, a tank 42, a pump 43, an air supply tube 44, and the first fluid passage 45a. The air source AS may be capable of supplying air to, in addition to the ejector 3, other components 12 of the laser beam machine than the ejector 3 (examples of the components 12 including an air cylinder 12a and an actuator as a gripping jaw mover 66, described later).

The air source AS supplies air to the mixer 41 through the air supply tube 44. The pump 43 supplies the spatter adhesion inhibiting agent C1 (for example, oil) to the mixer 41 from the tank 42. The mixer 41 receives the air supplied from the air source AS through the air supply tube 44, and receives the spatter adhesion inhibiting agent C1 (for example, oil) from the tank 42. Then, the mixer 41 mixes the received air and the received spatter adhesion inhibiting agent C1 to form the fluid mixture D2, which contains the spatter adhesion inhibiting agent C1 (for example, oil) and the air. The mixer 41 also transmits the fluid mixture D2 to the blaster 36 through the first fluid passage 45a. It is to be noted that the mixer 41 may be a lubricator (the lubricator will be described later). In this case, the pump 43 may be omitted. The lubricator may be capable of adjusting the ratio of the spatter adhesion inhibiting agent C1 (for example, oil) to the fluid mixture D2 blasted from the blaster 36.

In the examples illustrated in FIGs. 4 and 5, the ejector 3 is capable of adjusting the ratio of the spatter adhesion inhibiting agent C1 (for example, oil) to the fluid mixture D2 blasted from the blaster 36 between a first ratio and a second ratio that is greater than zero and smaller than the first ratio.

In the example illustrated in FIG. 4, in a state in which the ratio of the spatter adhesion inhibiting agent C1 (for example, oil) to the fluid mixture D2 blasted from the blaster 36 is the first ratio, the ejector 3 ejects the fluid mixture D2, which contains the spatter adhesion inhibiting agent C1 (for example, oil), from the blaster 36 toward the leading end portion 31 of the spatter guard 30 and the inner surface Pn of the pipe P. By spraying the fluid mixture D2, which contains the spatter adhesion inhibiting agent C1 (for example, oil), toward the leading end portion 31 of the spatter guard 30 and the inner surface Pn of the pipe P at the first ratio, a sufficient amount of the spatter adhesion inhibiting agent C1 (for example, oil) is applied to the leading end portion 31 and the inner surface Pn.

In the example illustrated in FIG. 5, during the laser beam machining of the pipe P, the ejector 3 ejects the fluid mixture D2, which contains the spatter adhesion inhibiting agent C1 (for example, oil), from the blaster 36 toward the leading end portion 31 of the spatter guard 30 in a state in which the ratio of the spatter adhesion inhibiting agent C1 (for example, oil) to the fluid mixture D2 blasted from the blaster 36 is the second ratio. By spraying the fluid mixture D2, which contains the spatter adhesion inhibiting agent C1 (for example, oil), toward the leading end portion 31 of the spatter guard 30 at the second ratio, the spatter B on the leading end portion 31 of the spatter guard 30 can be blown off the leading end portion 31 while the amount of consumption of the spatter adhesion inhibiting agent C1 (for example, oil) is suppressed.

The following description is based on the assumption that the spatter B is collected by the extractor 55, described later. In the example illustrated in FIG. 5, the spatter adhesion inhibiting agent C1 content in the fluid mixture D2 is small. This configuration reduces the amount of the spatter adhesion inhibiting agent C1 collected by the extractor 55. This configuration reduces the negative influence of the spatter adhesion inhibiting agent C1 (for example, oil) the extractor 55, lowering the likelihood of failure of the extractor 55. Also in the example illustrated in FIG. 5, the fluid mixture D2, which contains the spatter adhesion inhibiting agent C1 (for example, oil), is ejected to the inner surface Pn of the pipe P as an additional amount. This configuration further more effectively inhibits adhesion of the spatter B to the inner surface Pn of the pipe P.

As exemplified in FIG. 4, the ejector 3 may include a first open-close valve 49a and/or a first flow control valve 49b. In the example illustrated in FIG. 4, the first open-close valve 49a is provided between the air source AS and the mixer 41, and opens and closes the fluid passage between the air source AS and the mixer 41. The first flow control valve 49b adjusts the flow rate of the air flowing through the fluid passage between the air source AS and the mixer 41. The pump 43 may be capable of adjusting, based on a command received from the controller 9, the flow rate of the spatter adhesion inhibiting agent C1 (for example, oil) supplied to the mixer 41 from the tank 42.

In the examples illustrated in FIGs. 4 and 6, the ejector 3 is capable of adjusting the ratio of the spatter adhesion inhibiting agent C1 (for example, oil) to the fluid D blasted from the blaster 36 between zero and a first ratio that is greater than zero.

In the example illustrated in FIG. 4, in a state in which the ratio of the spatter adhesion inhibiting agent C1 (for example, oil) to the fluid mixture D2 blasted from the blaster 36 is the first ratio, the ejector 3 ejects the fluid mixture D2, which contains the spatter adhesion inhibiting agent C1 (for example, oil), from the blaster 36 toward the leading end portion 31 of the spatter guard 30 and the inner surface Pn of the pipe P. By spraying the fluid mixture D2, which contains the spatter adhesion inhibiting agent C1 (for example, oil), toward the leading end portion 31 of the spatter guard 30 and the inner surface Pn of the pipe P at the first ratio, a sufficient amount of the spatter adhesion inhibiting agent C1 (for example, oil) is applied to the leading end portion 31 and the inner surface Pn.

In the example illustrated in FIG. 6, during the laser beam machining of the pipe P, the ejector 3 ejects the fluid D from the blaster 36 toward the leading end portion 31 of the spatter guard 30 in a state in which the ratio of the spatter adhesion inhibiting agent C1 (for example, oil) to the fluid D blasted from the blaster 36 is zero. By spraying the fluid D with zero spatter adhesion inhibiting agent C1 content ejected toward the leading end portion 31 of the spatter guard 30, the spatter B on the leading end portion 31 of the spatter guard 30 can be blown off the leading end portion 31 without consuming the spatter adhesion inhibiting agent C1.

The following description is based on the assumption that the spatter B is collected by the extractor 55, described later. In the example illustrated in FIG. 6, the fluid D has no spatter adhesion inhibiting agent C1 content. This configuration further reduces the amount of the spatter adhesion inhibiting agent C1 collected by the extractor 55. This reduction, in turn, reduces the negative influence of the spatter adhesion inhibiting agent C1 (for example, oil) on the extractor 55, lowering the likelihood of failure of the extractor 55.

In the examples illustrated in FIGs. 4 and 6 (or FIGs. 7 and 8), the ejector 3 is capable of selectively performing gas supply mode N2 (see FIG. 6 or 8) and fluid mixture supply mode N1 (see FIG. 4 or 7). In the gas supply mode N2, the ejector 3 supplies the gas D1 (for example, air) to the blaster 36. In the fluid mixture supply mode N1, the ejector 3 supplies the fluid mixture D2, which contains the gas D1 (for example, air) and the spatter adhesion inhibiting agent C1 (for example, oil), to the blaster 36.

By performing the fluid mixture supply mode N1 (see FIG. 4 or 7), the ejector 3 ejects the fluid mixture D2, which contains the gas D1 (for example, air) and the spatter adhesion inhibiting agent C1 (for example, oil), to the leading end portion 31 of the spatter guard 30 and the inner surface Pn of the pipe P. By performing the gas supply mode N2 (see FIG. 6 or 8), the ejector 3 blows off the spatter B that was received by the leading end portion 31 of the spatter guard 30 from the leading end portion 31 of the spatter guard 30 to the inner surface Pn of the pipe P.

In the example illustrated in FIG. 7, the ejector 3 includes the first fluid passage 45a and a first supplier 46a (for example, the mixer 41). Through the first fluid passage 45a, the fluid mixture D2 (for example, oil air), which contains the gas D1 (for example, air) and the spatter adhesion inhibiting agent C1 (for example, oil), is supplied to the blaster 36 (more specifically, the blast hole 36h). The first supplier 46a supplies the fluid mixture D2 (for example, oil air), which contains the gas D1 (for example, air) and the spatter adhesion inhibiting agent C1 (for example, oil), to the first fluid passage 45a. The first supplier 46a (for example, the mixer 41) receives the gas D1 (for example, air) from a second supplier 46b (for example, the air source AS) through the air supply tube 44, and receives the spatter adhesion inhibiting agent C1 (for example, oil) from the tank 42. Then, the first supplier 46a mixes the received gas D1 and the received spatter adhesion inhibiting agent C1 to form the fluid mixture D2, which contains the gas D1 (for example, air) and the spatter adhesion inhibiting agent C1 (for example, oil).

In the example illustrated in FIG. 7, the ejector 3 (more specifically, the first supplier 46a) includes a lubricator 41a. The lubricator 41a mixes gas (for example, air) with the spatter adhesion inhibiting agent C1 (for example, oil). The lubricator 41a is one embodiment of the mixer 41. The lubricator 41a uses the pressure of the gas D1 (more specifically, air) supplied from the second supplier 46b (for example, the air source AS) to retrieve the spatter adhesion inhibiting agent C1 (for example, oil) out of the tank 42. Then, the lubricator 41a mixes the retrieved spatter adhesion inhibiting agent C1 (for example, oil) with the gas D1 (more specifically, air). This configuration ensures that the pump that retrieves the spatter adhesion inhibiting agent C1 out of the tank 42 is omitted. It is to be noted that in the example illustrated in FIG. 7, any known lubricator is employable as the lubricator 41a.

Alternatively, the mixer 41 may mix the gas supplied from the second supplier 46b (for example, the air source AS) with the spatter adhesion inhibiting agent C1 retrieved from the tank 42 using a pump. Further alternatively, the mixer 41 may be implemented by a joint that connects a supply tube through which gas is supplied with a supply tube through which the spatter adhesion inhibiting agent C1 is supplied.

In the example illustrated in FIG. 8, the ejector 3 includes a second fluid passage 45b. Through the second fluid passage 45b, the gas D1 (for example, air) is supplied to the blaster 36 (more specifically, the blast hole 36h). The ejector 3 also includes the second supplier 46b (for example, the air source AS), which supplies the gas D1 (for example, air) to the second fluid passage 45b.

As exemplified in FIGs. 7 and 8, a part of the first fluid passage 45a and a part of the second fluid passage 45b may be served by a common part. In other words, the ejector 3 may include a common fluid passage 45c. The common fluid passage 45c serves as a part of the first fluid passage 45a and serves as a part of the second fluid passage 45b.

As exemplified in FIG. 7, the ejector 3 may include the first open-close valve 49a and a second open-close valve 49c. The first open-close valve 49a opens and closes the first fluid passage 45a. The second open-close valve 49c opens and closes the second fluid passage 45b. In the example illustrated in FIG. 7, the controller 9 turns the first open-close valve 49a into open state, and turns the second open-close valve 49c into closed state. By turning the first open-close valve 49a into open state and turning the second open-close valve 49c into closed state, the first supplier 46a (for example, the mixer 41, such as the lubricator 41a) supplies the fluid mixture D2, which contains the gas D1 and the spatter adhesion inhibiting agent C1, to the blaster 36. Also in the example illustrated in FIG. 8, the controller 9 turns the first open-close valve 49a into closed state, and turns the second open-close valve 49c into open state. By turning the first open-close valve 49a into closed state and turning the second open-close valve 49c into open state, the second supplier 46b (for example, the air source AS, such as an air compressor) supplies the gas D1 to the blaster 36.

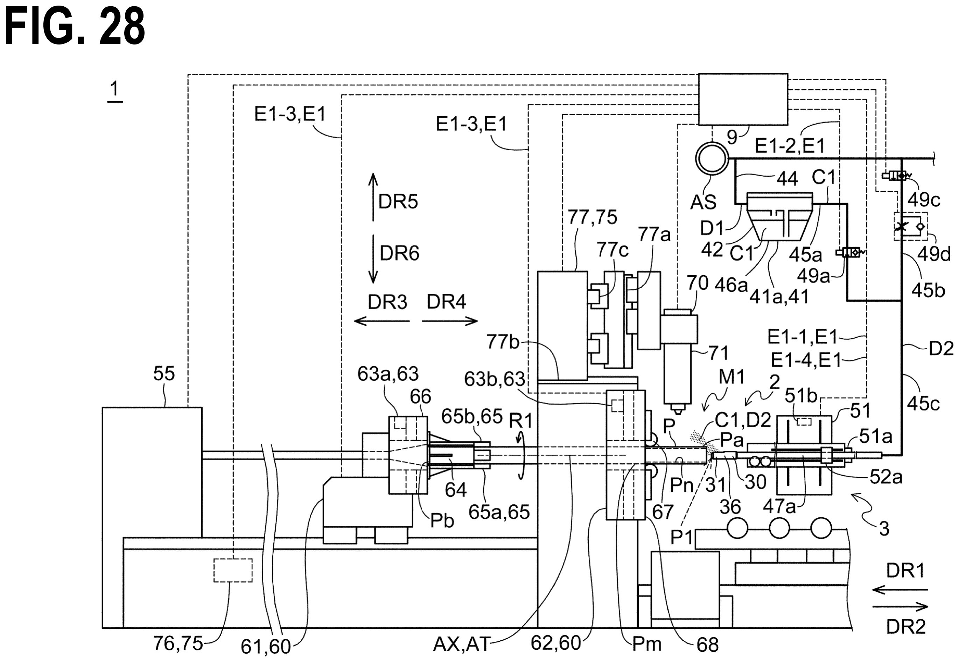

In the example illustrated in FIG. 7, the first open-close valve 49a is provided between the air source AS and the mixer 41 (more specifically, the lubricator 41a). Alternatively, as exemplified in FIG. 28, the first open-close valve 49a may be provided between the mixer 41 (more specifically, the lubricator 41a) and the blaster 36. In the example illustrated in FIG. 7, in the fluid mixture supply mode N1 (or spatter adhesion inhibiting agent ejection mode M1 illustrated in FIG. 28), the mixer 41 (more specifically, the lubricator 41a) mixes the gas D1 (for example, air) and the spatter adhesion inhibiting agent C1 (for example, oil) to form the fluid mixture D2. Then, the mixer 41 supplies the fluid mixture D2 to the first fluid passage 45a.

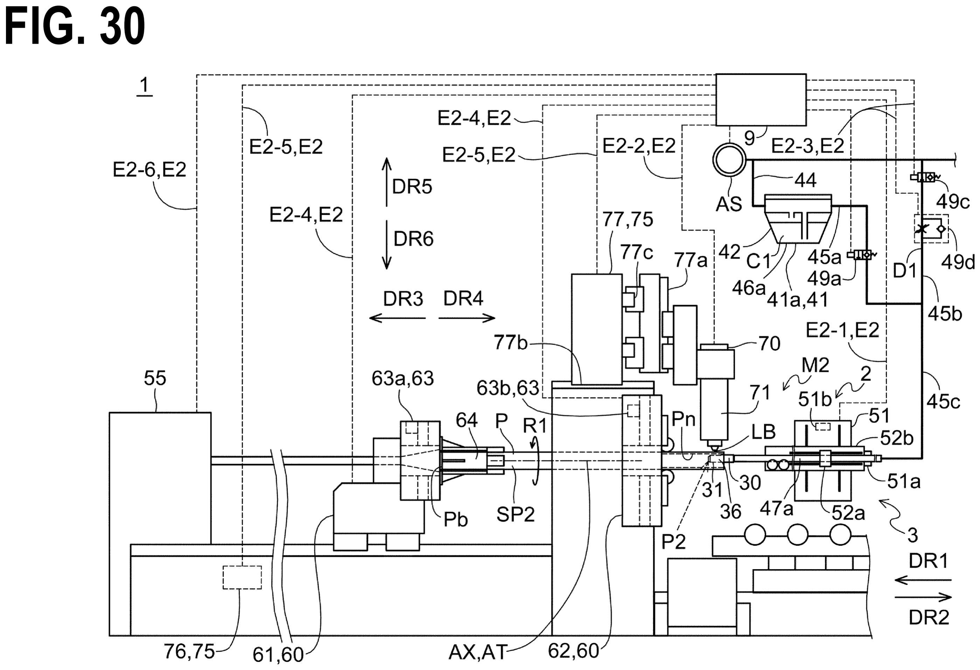

In the example illustrated in FIG. 8, the second open-close valve 49c is provided between the air source AS and the blaster 36. The second open-close valve 49c may be provided between the air source AS and the common fluid passage 45c. In the example illustrated in FIG. 8, in the gas supply mode N2 (or first machining mode M2, described later by referring to FIG. 30), the second open-close valve 49c is turned into open state to allow air to be supplied to the second fluid passage 45b from the air source AS through the second open-close valve 49c.

The ejector 3 may include a second flow control valve 49d. The second flow control valve 49d adjusts the flow rate of the air flowing through the second fluid passage 45b.

In the example illustrated in FIG. 7, the ejector 3 supplies the fluid mixture D2, which contains the gas D1 (for example, air) and the spatter adhesion inhibiting agent C1 (for example, oil), to the blaster 36. The ejector 3 also blasts the fluid mixture D2 from the blaster 36 toward the leading end portion 31 of the spatter guard 30 and the inner surface Pn of the pipe P. By spraying the fluid mixture D2 toward the leading end portion 31 of the spatter guard 30 and the inner surface Pn of the pipe P, the spatter adhesion inhibiting agent C1 (for example, oil) is applied to the leading end portion 31 and the inner surface Pn.

In the example illustrated in FIG. 8, during the laser beam machining of the pipe P, the ejector 3 supplies the gas D1 with no spatter adhesion inhibiting agent content to the blaster 36. The ejector 3 also blasts the gas D1 from the blaster 36 toward the leading end portion 31 of the spatter guard 30. By spraying the gas D1 with no spatter adhesion inhibiting agent content toward the leading end portion 31 of the spatter guard 30, the spatter B on the leading end portion 31 of the spatter guard 30 can be blown off the leading end portion 31 without consuming the spatter adhesion inhibiting agent.

In the example illustrated in FIG. 4 or 7, the ejector 3 (more specifically, the blaster 36) is capable of ejecting the spatter adhesion inhibiting agent C1 simultaneously to the leading end portion 31 of the spatter guard 30 and the inner surface Pn of the pipe P. This configuration shortens the time necessary for applying the spatter adhesion inhibiting agent C1, resulting in a reduction in preparation time prior to laser beam machining.

In the example illustrated in FIG. 1, the ejector 3 is capable of ejecting the fluid mixture D2, which contains the gas D1 and the spatter adhesion inhibiting agent C1, to the inner surface Pn of the pipe P in a state in which the blaster 36 is positioned outside the pipe P. In this case, it is easy to apply the spatter adhesion inhibiting agent C1 to an end edge Pe of the inner surface Pn of the pipe P. The end edge Pe is located in the fourth direction *DR4.* Also in the above case, it is easy for a user to visually recognize the fluid mixture D2 (for example, oil air) blasted from the blaster 36 toward the inner surface Pn of the pipe P (see FIG. 16), in a case that a machining area of the laser beam machine is visually recognizable from outside the laser beam machine.

The ejector 3 (more specifically, the blaster 36) may eject oil air containing oil and air to the leading end portion 31 of the spatter guard 30 and the inner surface Pn of the pipe P. By transferring oil by air, it is easy to apply oil to the inner surface Pn of the pipe P.

As exemplified in FIG. 1, a part of the spatter adhesion inhibiting agent C1 blasted from the blaster 36 may scatter to outside the pipe P.

In the example illustrated in FIG. 1, the blaster 36 is capable of ejecting the spatter adhesion inhibiting agent C1 (for example, oil) to an upper surface 31u of the leading end portion 31 of the spatter guard 30. In this case, when the spatter B is received by the upper surface 31u of the leading end portion 31, adhesion of the spatter B to the upper surface 31u is inhibited (see FIG. 2).

In the example illustrated in FIG. 2, the blaster 36 forms a flow of the fluid D along the upper surface 31u of the leading end portion 31 of the spatter guard 30. In the example illustrated in FIG. 2, the blaster 36 includes the blast hole 36h.

The blast hole 36h may be provided at a height approximately identical to the height of the upper surface 31u of the leading end portion 31 of the spatter guard 30. Alternatively, the height of the blast hole 36h may be significantly greater than the height of the upper surface 31u of the leading end portion 31 of the spatter guard 30.

In the example illustrated in FIG. 2, the extending direction in which the blast hole 36h extends is approximately parallel to the longitudinal direction of the spatter guard 30. Alternatively, the extending direction of the blast hole 36h may be inclined relative to the longitudinal direction of the spatter guard 30. In the example illustrated in FIG. 2, the blast hole 36h of the blaster 36 is a single blast hole 36h. Alternatively, the blaster 36 may include a plurality of injection holes 36h.

In the example illustrated in FIG. 1, the ejector 3 includes the blast hole 36h. Through the blast hole 36h, the spatter adhesion inhibiting agent C1 is sprayed to the leading end portion 31 of the spatter guard 30 and the inner surface Pn of the pipe P. In the example illustrated in FIG. 1, an upper end 360u of an outlet 360 of the blast hole 36h is provided at a position further in the second direction *DR2* than a lower end 360w of the outlet 360 of the blast hole 36h. In this case, the fluid containing the spatter adhesion inhibiting agent C1 (for example, the fluid mixture D2, which contains the spatter adhesion inhibiting agent C1 and gas) is easily caused to diffuse in an upward oblique direction from the upper end 360u of the outlet 360. As exemplified in FIG. 1, the spatter adhesion inhibiting agent C1 diffusing in an upward oblique direction from the upper end 360u of the outlet 360 is applied to the inner surface Pn of the pipe P in a suitable manner.

### (Spatter Guard 30)

In the example illustrated in FIG. 2, the blaster 36 is provided in the spatter guard 30. This configuration in which the blaster 36 is provided in the spatter guard 30 reduces the space occupied by the spatter adhesion inhibitor 2A as compared with a case that the blaster 36 is separate from the spatter guard 30.

In the example illustrated in FIG. 9, the spatter guard 30 includes the leading end portion 31, an intermediate portion 35, and a base end portion 38. The intermediate portion 35 is where the blaster 36 (more specifically, the blast hole 36h) is provided. The base end portion 38 defines a fluid passage 38v. The fluid passage 38v is connected to the blaster 36 (more specifically, the blast hole 36h). The leading end portion 31 is provided at a position further in the first direction *DR1* than the intermediate portion 35. The intermediate portion 35 is provided at a position further in the first direction *DR1* than the base end portion 38.

In the example illustrated in FIG. 9, the blast hole 36h has a fluid passage cross-sectional area smaller than the fluid passage cross-sectional area of the fluid passage 38v of the base end portion 38. In this case, the blast hole 36h is able to spray fluid to the leading end portion 31 at high speed. The fluid passage cross-sectional area may decrease in a stepwise or continuous manner from the fluid passage 38v of the base end portion 38 toward the blast hole 36h.

The spatter guard 30 may be changeable with the second spatter guard 30-2, which is different in size from the spatter guard 30. In the example illustrated in FIG. 9, the spatter adhesion inhibitor 2A of the laser beam machine includes the spatter guard 30, the first tube 47a (for example, a rigid tube), and a second tube 47b (for example, a flexible tube). The first tube 47a supplies fluid to the fluid passage 38v of the spatter guard 30. The second tube 47b is connected to the first tube 47a via the connector 48. In the examples illustrated in FIGs. 9 and 10, the first tube 47a is removable off the connector 48, and the second spatter guard 30-2 is attachable to the connector 48 via a tube 47a-2, which is different from the first tube 47a. The internal fluid passage defined by the first tube 47a and the second tube 47b may function as a part of the common fluid passage 45c.

In the example illustrated in FIG. 11, the leading end portion 31 of the spatter guard 30 includes a bottom wall 321, a first side wall 323, and a second side wall 325. The second side wall 325 faces the first side wall 323. In the example illustrated in FIG. 12, the first side wall 323 and the second side wall 325 prevent the spatter B colliding with the leading end portion 31 of the spatter guard 30 from diffusing in lateral directions beyond the first side wall 323 or the second side wall 325. Thus, the spatter B is received the leading end portion 31 of the spatter guard 30 in a suitable manner.

In the example illustrated in FIG. 11, the bottom wall 321, the first side wall 323, and the second side wall 325 define an elongated space SP1. The elongated space SP1 extends in the first direction *DR1*. A portion of the spatter guard 30 over the elongated space SP1 is open (in other words, an elongated opening OP is provided over the elongated space SP1). In the example illustrated in FIG. 13, the spatter generated as a result of irradiation of the laser beam LB to the pipe P is received into the elongated space SP1 through the elongated opening OP, which is defined between an upper edge 323e of the first side wall 323 and an upper edge 325e of the second side wall 325.

In the example illustrated in FIG. 14, the blaster 36 (more specifically, the blast hole 36h) blasts the fluid D (for example, air) into the elongated space SP1. The elongated space SP1 is surrounded on three sides by the bottom wall 321, the first side wall 323, and the second side wall 325. With this configuration, the fluid D blasted from the blaster 36 blows off the spatter in the first direction *DR1* in a suitable manner.

In the example illustrated in FIG. 12, the leading end portion 31 of the spatter guard 30 includes an inner surface 320n. The inner surface 320n defines the elongated space SP1 and has an approximately U shape in a view from a direction along the longitudinal direction of the spatter guard 30 (more specifically, in a view from a direction along the second direction *DR2*).

An upper surface 321u of the bottom wall 321 may have an approximately arc shape in a view from a direction along the longitudinal direction of the spatter guard 30 (more specifically, in a view from a direction along the second direction *DR2).* The first side wall 323 includes a first side surface 323n. The first side surface 323n faces the elongated space SP1, and may have an approximately linear shape in a view from a direction along the longitudinal direction of the spatter guard 30 (more specifically, in a view from a direction along the second direction *DR2*)*.* The second side wall 325 includes a second side surface 325n. The second side surface 325n faces the elongated space SP1, and may have an approximately linear shape in a view from a direction along the longitudinal direction of the spatter guard 30 (more specifically, in a view from a direction along the second direction *DR2*)*.*

In the example illustrated in FIG. 12, the upper surface 321u of the bottom wall 321 is connected smoothly, without a corner, to the first side wall 323's first side surface 323n, which faces the elongated space SP1. This configuration makes it difficult for the spatter B to adhere to anywhere between the upper surface 321u of the bottom wall 321 and the first side surface 323n of the first side wall 323.

In the example illustrated in FIG. 12, the upper surface 321u of the bottom wall 321 is connected smoothly, without a corner, to the second side wall 325's second side surface 325n, which faces the elongated space SP1. This configuration makes it difficult for the spatter B to adhere to anywhere between the upper surface 321u of the bottom wall 321 and the second side surface 325n of the second side wall 325.

In the example illustrated in FIG. 15, the blaster 36 (more specifically, the blast hole 36h) is capable of blasting the spatter adhesion inhibiting agent C1 (more specifically, the fluid mixture D2, which contains the spatter adhesion inhibiting agent C1 and gas) into the elongated space SP1 in such a diffusive manner that the spatter adhesion inhibiting agent C1 is ejected simultaneously to the upper surface 321u of the bottom wall 321, the first side surface 323n of the first side wall 323, and the second side surface 325n of the second side wall 325. It is to be noted that an example of the fluid mixture D2 is oil air containing oil and air.

In the example illustrated in FIG. 15, the leading end portion 31 of the spatter guard 30 includes the inner surface 320n, which defines the elongated space SP1. The blaster 36 (more specifically, the blast hole 36h) is capable of spraying the spatter adhesion inhibiting agent C1 (more specifically, the fluid mixture D2, which contains the spatter adhesion inhibiting agent C1 and gas) into the elongated space SP1 in such a diffusive manner that the spatter adhesion inhibiting agent C1 is applied to a majority part of the inner surface 320n, which defines the elongated space SP1 (more preferably, substantially the entire inner surface 320n, which defines the elongated space SP1). The configuration in which the spatter adhesion inhibiting agent C1 is applied to a majority part of the inner surface 320n, which defines the elongated space SP1, inhibits adhesion of the spatter B to the inner surface 320n in a suitable manner.

In the example illustrated in FIG. 15, the blaster 36 (more specifically, the blast hole 36h) is capable of blasting the spatter adhesion inhibiting agent C1 (more specifically, the fluid mixture D2, which contains the spatter adhesion inhibiting agent C1 and gas) into the elongated space SP1 in such a diffusive manner that the spatter adhesion inhibiting agent C1 passing through the elongated opening OP, which is located over the elongated space SP1, reaches the inner surface Pn of the pipe P.

In the example illustrated in FIG. 1, the spatter adhesion inhibiting agent C1 blasted from the blaster 36 (more specifically, the blast hole 36h) toward the inner surface Pn of the pipe P has a momentum component in the first direction *DR1* and a momentum component in the fifth direction *DR5.* In this case, the spatter adhesion inhibiting agent C1 is applied over a wide range of the inner surface Pn of the pipe P as compared with a case that the spatter adhesion inhibiting agent C1 has the momentum component in the fifth direction *DR5* alone.

In the example illustrated in FIG. 15, the blast hole 36h is provided approximately at the center of the leading end portion 31 of the spatter guard 30 in a view from a direction along the longitudinal direction of the spatter guard 30 (more specifically, in a view from a direction along the second direction *DR2*)*.*

In the example illustrated in FIG. 15, the blast hole 36h is provided at a position that overlaps a bottom portion of the elongated space SP1 in a view from a direction along the longitudinal direction of the spatter guard 30 (more specifically, in a view from a direction along the second direction *DR2*)*.* In this case, fluid (for example, air) is sprayed to the bottom portion of the elongated space SP1 through the blast hole 36h. This configuration enables the fluid (for example, air) to blow off the spatter on the bottom wall 321 of the leading end portion 31 in the first direction *DR1* in a suitable manner.

It is to be noted that the shape of the leading end portion 31 of the spatter guard 30 will not be limited to the shape illustrated in FIGs. 14 and 15. For example, the upper surface 31u of the leading end portion 31 of the spatter guard 30 may be a flat surface.

### (Rotational Driver 63)

In the example illustrated in FIG. 16, the spatter adhesion inhibitor 2A of the laser beam machine includes a rotational driver 63. The rotational driver 63 rotates the pipe P about a longitudinal center axis AT of the pipe. In the example illustrated in FIG. 16, the rotational driver 63 is capable of rotating the pipe P about the longitudinal center axis AT (see arrow R1) in a state in which the ejector 3 (more specifically, the blaster 36) is blasting the spatter adhesion inhibiting agent C1 toward the inner surface of the pipe P. In this case, the spatter adhesion inhibiting agent C1 can be applied efficiently over the entire inner surface Pn of the pipe P (see the arrow R1 illustrated in FIG. 15).

In the example illustrated in FIG. 15, the blaster 36 includes the blast hole 36h. Through the blast hole 36h, the spatter adhesion inhibiting agent C1 can be sprayed upward beyond the spatter guard 30. In the example illustrated in FIG. 15, through the blast hole 36h, the spatter adhesion inhibiting agent C1 can not be sprayed downward beyond the spatter guard 30. Alternatively, as exemplified in FIG. 17, the blaster 36 may include an auxiliary blast hole 36j, in addition to the blast hole 36h, through which the spatter adhesion inhibiting agent C1 can be blasted upward beyond the spatter guard 30. Through the auxiliary blast hole 36j, the spatter adhesion inhibiting agent C1 can be sprayed downward beyond the spatter guard 30. In the example illustrated in FIG. 17, the blaster 36 is capable of applying the spatter adhesion inhibiting agent C1 over the entire inner surface Pn of the pipe P in stationary state. In this case, when the spatter adhesion inhibiting agent C1 is ejected to the inner surface Pn of the pipe P, it is not necessary to rotate the pipe P about the longitudinal center axis of the pipe.

### (Spatter Guard Mover 51)

In the example illustrated in FIG. 16, the spatter adhesion inhibitor 2A of the laser beam machine includes a spatter guard mover 51. The spatter guard mover 51 moves the spatter guard 30. The spatter guard mover 51 may include a first driver 51a. The first driver 51a moves the spatter guard 30 in a direction substantially parallel to the longitudinal direction of the pipe P (for example, the third direction *DR3* or the fourth direction *DR4).* The spatter guard mover 51 may also include a second driver 51b. The second driver 51b moves the spatter guard 30 in a direction substantially parallel to the vertical direction (for example, the fifth direction *DR5* or the sixth direction *DR6*).

In the example illustrated in FIG. 16, the spatter guard mover 51 includes a first slider 52a. The first slider 52a supports the first tube 47a. The first driver 51a moves the first slider 52a in the third direction *DR3* (or the fourth direction *DR4*)*.* When the first slider 52a moves in the third direction *DR3* (or the fourth direction *DR4*)*,* the first tube 47a and the spatter guard 30 move in the third direction *DR3* (or the fourth direction *DR4*) together with the first slider 52a.

In the example illustrated in FIG. 16, the spatter guard mover 51 includes a second slider 52b. The second slider 52b supports the first slider 52a. The second driver 51b moves the second slider 52b in the fifth direction *DR5* (or the sixth direction *DR6*). When the second slider 52b moves in the fifth direction *DR5* (or the sixth direction *DR6*), the first slider 52a, the first tube 47a, and the spatter guard 30 move in the fifth direction *DR5* (or the sixth direction *DR6*) together with the second slider 52b.

In the examples illustrated in FIGs. 18 and 19, the spatter guard mover 51 (more specifically, the first driver 51a and the second driver 51b) is capable of moving the spatter guard 30 between a first position P1 and a second position P2. In the example illustrated in FIG. 18, when the spatter guard 30 is located at the first position P1, the entire spatter guard 30 is positioned outside the pipe P. In the example illustrated in FIG. 19, when the spatter guard 30 is located at the second position P2, the leading end portion 31 of the spatter guard 30 is inserted in the pipe P. In the examples illustrated in FIGs. 18 and 19, the second position P2 is located at a position further in the third direction *DR3* than the first position P1. Also in the examples illustrated in FIGs. 18 and 19, the second position P2 is located at a position higher than the first position P1 (more specifically, the second position P2 is located at a position slightly higher than the first position P1).

In the example illustrated in FIG. 18, in a state in which the spatter guard 30 is located at the first position P1, fluid containing the spatter adhesion inhibiting agent C1 (for example, the fluid mixture D2, which contains oil and air) is ejected from the blaster 36 of the spatter guard 30 toward the inner surface Pn of the pipe P. In the example illustrated in FIG. 19, in a state in which the spatter guard 30 is located at the second position P2, the spatter guard 30 receives spatter that has been generated as a result of irradiation of a laser beam to the pipe P. Also in the state in which the spatter guard 30 is located at the second position P2, the fluid D (for example, the gas D1, such as air) is ejected from the blaster 36 of the spatter guard 30 toward the inner surface Pn of the pipe P.

The spatter adhesion inhibitor 2A of the laser beam machine may include guide rollers 54. The guide rollers 54 guide the movement of the first tube 47a in the third direction *DR3.* In the example illustrated in FIG. 19, the guide rollers 54 are supported by the second slider 52b.

### (Extractor 55)

As exemplified in FIG. 20, the spatter adhesion inhibitor 2A of the laser beam machine may include the extractor 55. The extractor 55 extracts the spatter B. In the example illustrated in FIG. 21, the extractor 55 extracts the spatter B to cause the spatter B to be discharged to outside the pipe P from the internal space SP2 of the pipe P through the second end portion Pb of the pipe P. By discharging the spatter B to outside the pipe P, adhesion of the spatter B to the inner surface Pn of the pipe P is inhibited.

In the example illustrated in FIG. 21, the extractor 55 extracts, in the third direction *DR3* (more specifically, in a direction toward a first chuck 61), the spatter adhesion inhibiting agent C1 (for example, oil) adhered to the inner surface Pn of the pipe P. In this manner, the spatter adhesion inhibiting agent C1 applied to the inner surface of the first end portion Pa of the pipe P is moved in the third direction *DR3* (see the dashed arrows illustrated in FIG. 21). This configuration ensures that it is not necessary for the ejector 3 to eject the spatter adhesion inhibiting agent C1 over the entire inner surface Pn of the pipe P.

The extractor 55 can not move the spatter adhesion inhibiting agent C1 applied to the inner surface Pn of the pipe P in the fourth direction *DR4.* In view of this configuration, the ejector 3 preferably ejects the spatter adhesion inhibiting agent C1 to the inner surface Pn of the first end portion Pa of the pipe P including the end edge Pe of the pipe P, which end edge Pe is located in the fourth direction *DR4.* The spatter adhesion inhibiting agent C1 applied to the end edge Pe of the inner surface Pn of the pipe P, which end edge Pe is located in the fourth direction *DR4,* is moved in the third direction *DR3* from the end edge Pe by the extraction of the extractor 55.

### (Cleaner 57)

As exemplified in FIG. 22, the spatter adhesion inhibitor 2A of the laser beam machine may include a cleaner 57 (for example, a brush 57b). The cleaner 57 removes the spatter B adhered to the spatter guard 30. In the first embodiment, the spatter adhesion inhibiting agent C1 is ejected to the leading end portion 31 of the spatter guard 30, and the spatter B on the leading end portion 31 of the spatter guard 30 is blown off by the fluid. This configuration ensures that accumulation of a large volume of the spatter B to the leading end portion 31 of the spatter guard 30 is inhibited. In contrast, it is conceivable that a small amount of the spatter B adheres to the leading end portion 31 of the spatter guard 30. In the example illustrated in FIG. 22, the residual spatter B on the leading end portion 31 of the spatter guard 30 is removed by the cleaner 57 (for example, the brush 57b).

In the example illustrated in FIG. 22, the spatter guard mover 51 (more specifically, the first driver 51a and the second driver 51b) is capable of moving the spatter guard 30 to a third position P3. The third position P3 is where the leading end portion 31 of the spatter guard 30 contacts the cleaner 57 (for example, the brush 57b). By the spatter guard mover 51 moving the spatter guard 30, the leading end portion 31 of the spatter guard 30 moves relative to the cleaner 57 (for example, the brush 57b) while keeping in contact with the cleaner 57 (for example, the brush 57b). In this manner, the residual spatter B on the leading end portion 31 of the spatter guard 30 is removed by the cleaner 57 (for example, the brush 57b).

### (Second Embodiment)

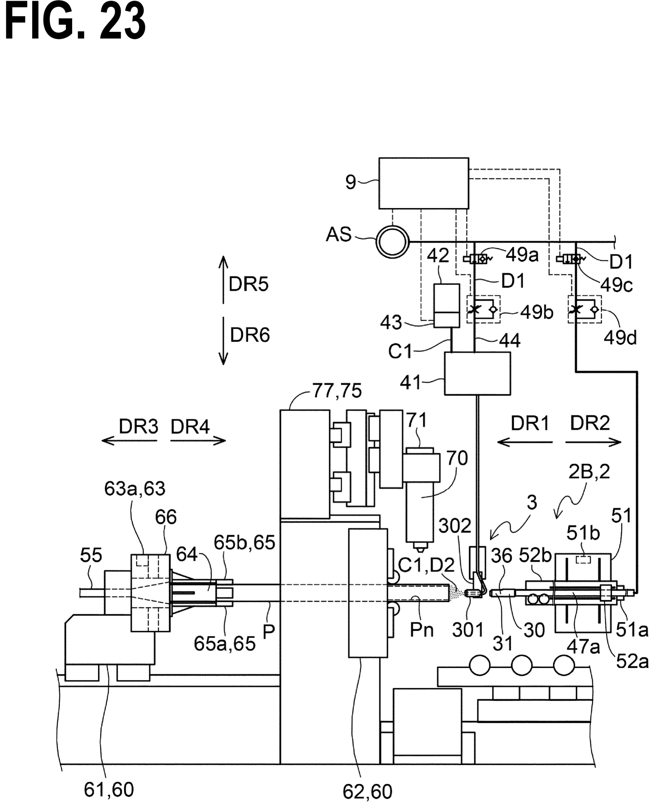

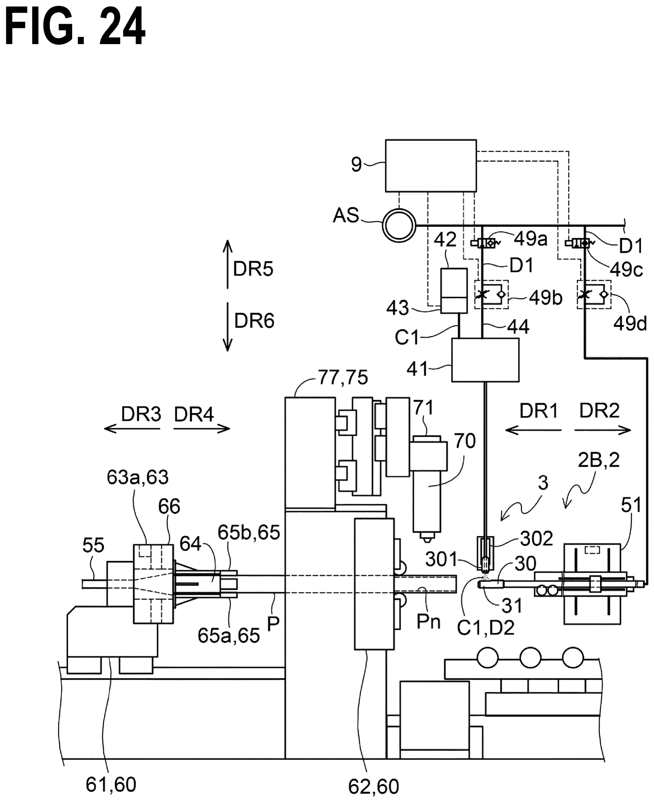

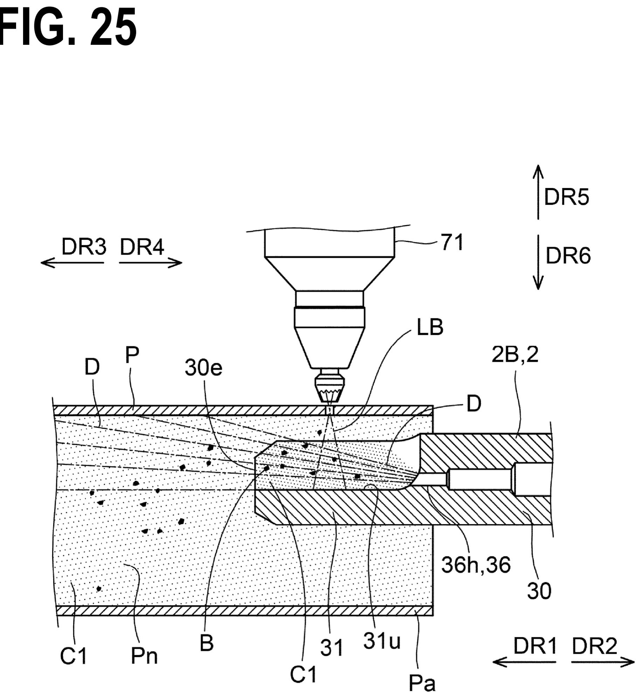

By referring to FIGs. 23 to 25, a spatter adhesion inhibitor 2B, according to the second embodiment, of a laser beam machine will be described. FIGs. 23 and 24 each are a schematic illustration of the spatter adhesion inhibitor 2B, according to the second embodiment, of the laser beam machine. FIG. 25 is a cross-sectional view of the leading end portion 31 of the spatter guard 30, schematically illustrating a state in which, during laser beam machining, the spatter B is being blown off the leading end portion 31 of the spatter guard 30 to the inner surface Pn of the pipe P. It is to be noted that in FIG. 25, a state in which the fluid D is being blasted from the blaster 36 is indicated by a plurality of radial, single-dashed lines.

The spatter adhesion inhibitor 2B, according to the second embodiment, of the laser beam machine is different from the spatter adhesion inhibitor 2A, according to the first embodiment, of the laser beam machine in that the ejector 3, which ejects the spatter adhesion inhibiting agent C1 to the leading end portion 31 of the spatter guard 30 and the inner surface Pn of the pipe P, is completely independent of the spatter guard 30. Otherwise, the spatter adhesion inhibitor 2B, according to the second embodiment, of the laser beam machine is similar to the spatter adhesion inhibitor 2A, according to the first embodiment, of the laser beam machine.

The following description of the second embodiment will mainly focus on those respects in which the second embodiment is different from the first embodiment. In contrast, those respects already described in the first embodiment will not be described in the second embodiment to avoid a repetition of description. Thus, it will be readily appreciated that those respects that are not explicitly described in the second embodiment but are described in the first embodiment also apply in the second embodiment.

As exemplified in FIGs. 23 to 25, the spatter adhesion inhibitor 2B, according to the second embodiment, of the laser beam machine includes (1) the spatter guard 30, which includes the leading end portion 31, which is insertable into the pipe P and receives spatter generated as a result of irradiation of a laser beam to the pipe P, (2) the blaster 36 (more specifically, a blast hole), which blasts fluid to the leading end portion 31 of the spatter guard 30, and (3) the ejector 3 (see FIGs. 23 and 24), which ejects the spatter adhesion inhibiting agent C1 to the leading end portion 31 of the spatter guard 30 and the inner surface Pn of the pipe P.

With this configuration, the spatter adhesion inhibitor 2B, according to the second embodiment, of the laser beam machine provides effects similar to the effects provided by the spatter adhesion inhibitor 2A, according to the first embodiment, of the laser beam machine.

In the examples illustrated in FIGs. 23 and 24, the ejector 3 includes a nozzle 301. The nozzle 301 is provided independently of the spatter guard 30. As exemplified in FIG. 23, the nozzle 301 applies the spatter adhesion inhibiting agent C1 to the inner surface Pn of the pipe P. As exemplified in FIG. 24, the nozzle 301 applies the spatter adhesion inhibiting agent C1 to the leading end portion 31 of the spatter guard 30.

The fluid ejected from the nozzle 301 may be the fluid mixture D2, which contains oil and air. In this case, the nozzle 301 sprays oil to the leading end portion 31 of the spatter guard 30. Alternatively, the nozzle 301 may drop the spatter adhesion inhibiting agent C1 (for example, oil) to the leading end portion 31 of the spatter guard 30.

In the examples illustrated in FIGs. 23 and 24, the nozzle 301 is supported by the nozzle support 302 in a tiltable manner. The nozzle 301 is changeable in posture (more specifically, tiltable) between a first posture (see FIG. 23) and a second posture (see FIG. 24). In the first posture, the nozzle 301 ejects the spatter adhesion inhibiting agent C1 to the inner surface Pn of the pipe P. In the second posture, the nozzle 301 ejects the spatter adhesion inhibiting agent C1 to the leading end portion 31 of the spatter guard 30.

### (Third Embodiment)

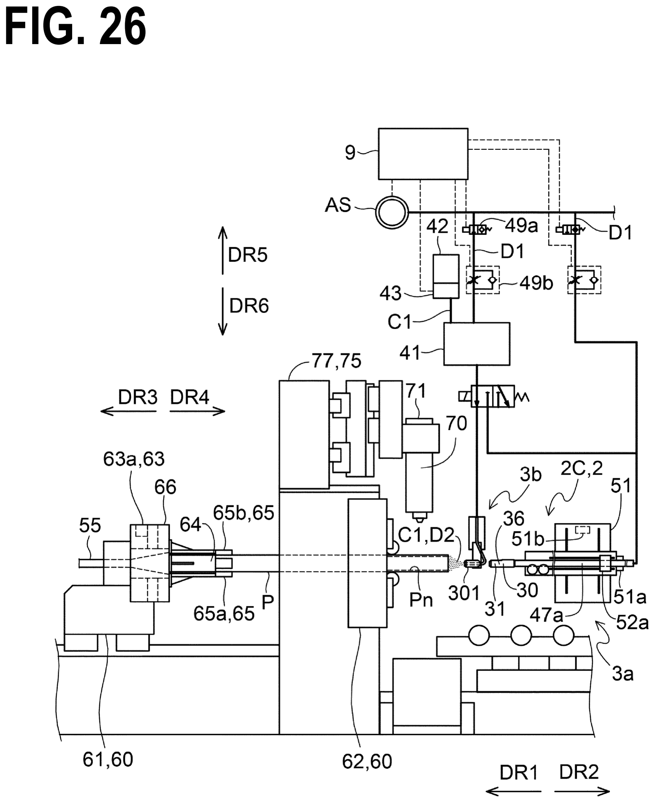

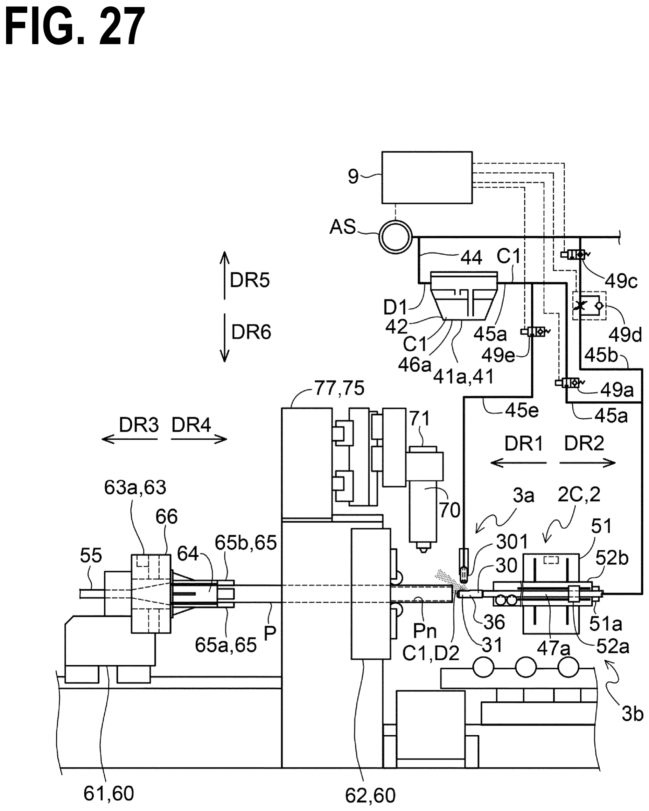

By referring to FIGs. 26 and 27, a spatter adhesion inhibitor 2C, according to the third embodiment, of a laser beam machine will be described. FIG. 26 is a schematic illustration of the spatter adhesion inhibitor 2C, according to the third embodiment, of the laser beam machine. FIG. 27 is a schematic illustration of a spatter adhesion inhibitor 2C, according to a first modification of the third embodiment, of a laser beam machine.

As exemplified in FIG. 26 or 27, the spatter adhesion inhibitor 2C, according to the third embodiment, of the laser beam machine includes a first ejector 3a and a second ejector 3b. The first ejector 3a ejects a spatter adhesion inhibiting agent to the leading end portion 31 of the spatter guard 30. The second ejector 3b ejects the spatter adhesion inhibiting agent to the inner surface Pn of the pipe P. The spatter adhesion inhibitor 2C, according to the third embodiment, of the laser beam machine is different from the spatter adhesion inhibitor 2A, according to the first embodiment, of the laser beam machine, and from the spatter adhesion inhibitor 2B, according to the second embodiment, of the laser beam machine in that the first ejector 3a, which ejects the spatter adhesion inhibiting agent to the leading end portion 31 of the spatter guard 30, is different from the second ejector 3b, which ejects the spatter adhesion inhibiting agent to the inner surface Pn of the pipe P. Otherwise, the spatter adhesion inhibitor 2C, according to the third embodiment, of the laser beam machine is similar to the spatter adhesion inhibitor 2A, according to the first embodiment, of the laser beam machine or to the spatter adhesion inhibitor 2B, according to the second embodiment, of the laser beam machine.

In the example illustrated in FIG. 26, the second ejector 3b includes the nozzle 301. The nozzle 301 is provided independently of the spatter guard 30. The nozzle 301 ejects the spatter adhesion inhibiting agent C1 to the inner surface Pn of the pipe P. In the example illustrated in FIG. 26, the first ejector 3a (more specifically, the blaster 36, which is provided in the spatter guard 30) ejects the spatter adhesion inhibiting agent C1 to the leading end portion 31 of the spatter guard 30. During the laser beam machining of the pipe P, the blaster 36 is capable of blasting blow-off fluid for blowing off the spatter to the leading end portion 31 of the spatter guard 30.

In the example illustrated in FIG. 27, the first ejector 3a includes the nozzle 301. The nozzle 301 is provided independently of the spatter guard 30. The nozzle 301 ejects the spatter adhesion inhibiting agent C1 to the leading end portion 31 of the spatter guard 30. In the example illustrated in FIG. 27, the second ejector 3b (more specifically, the blaster 36, which is provided in the spatter guard 30) ejects the spatter adhesion inhibiting agent C1 to the inner surface Pn of the pipe P. During the laser beam machining of the pipe P, the blaster 36 is capable of blasting blow-off fluid for blowing off the spatter to the leading end portion 31 of the spatter guard 30.

In the example illustrated in FIG. 27, the second ejector 3b includes the first open-close valve 49a. The first open-close valve 49a opens and closes the first fluid passage 45a (more specifically, the first fluid passage 45a, through which the fluid mixture D2, which contains the gas D1 and the spatter adhesion inhibiting agent C1, is supplied to the blaster 36). In the example illustrated in FIG. 27, the first open-close valve 49a is provided between the mixer 41 (more specifically, the lubricator 41a) and the blaster 36. As exemplified in FIG. 27, the first ejector 3a may include a third fluid passage 45e and a third open-close valve 49e. Through the third fluid passage 45e, the fluid mixture D2, which contains the gas D1 and the spatter adhesion inhibiting agent C1, is supplied to the nozzle 301. The third open-close valve 49e opens and closes the third fluid passage 45e. In the example illustrated in FIG. 27, the third open-close valve 49e is provided between the mixer 41 (more specifically, the lubricator 41a) and the nozzle 301.

In the example illustrated in FIG. 27, the ejector that includes the first ejector 3a and the second ejector 3b is capable of ejecting the spatter adhesion inhibiting agent C1 (more specifically, the fluid mixture D2, which contains gas and the spatter adhesion inhibiting agent C1) simultaneously to the leading end portion 31 of the spatter guard 30 and the inner surface Pn of the pipe P.

### (Fourth Embodiment)

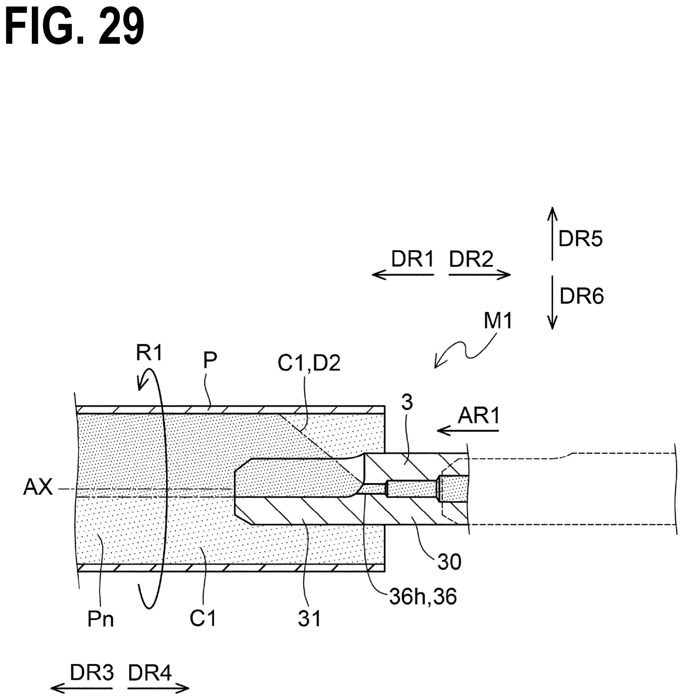

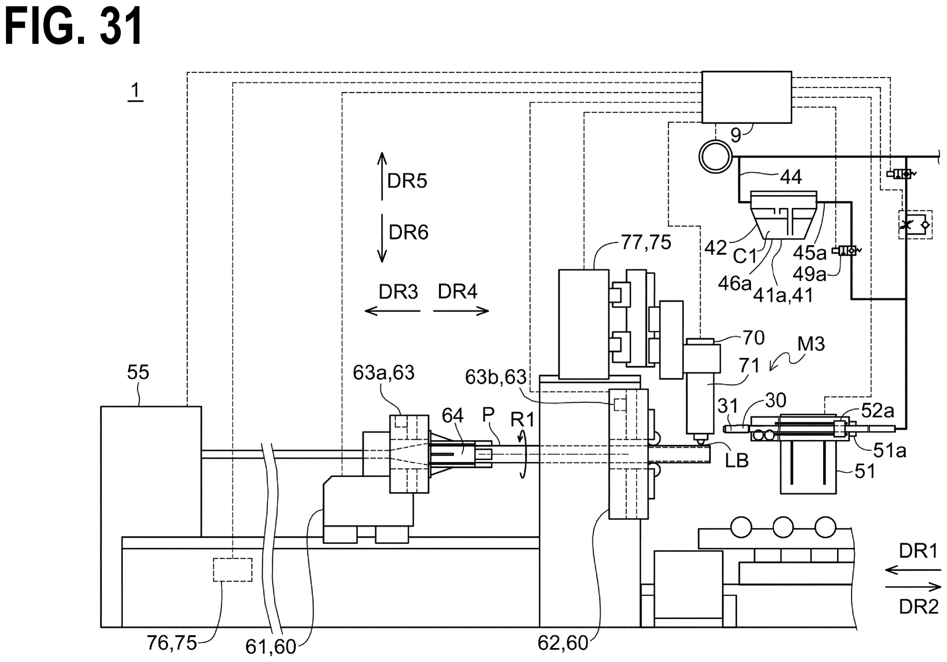

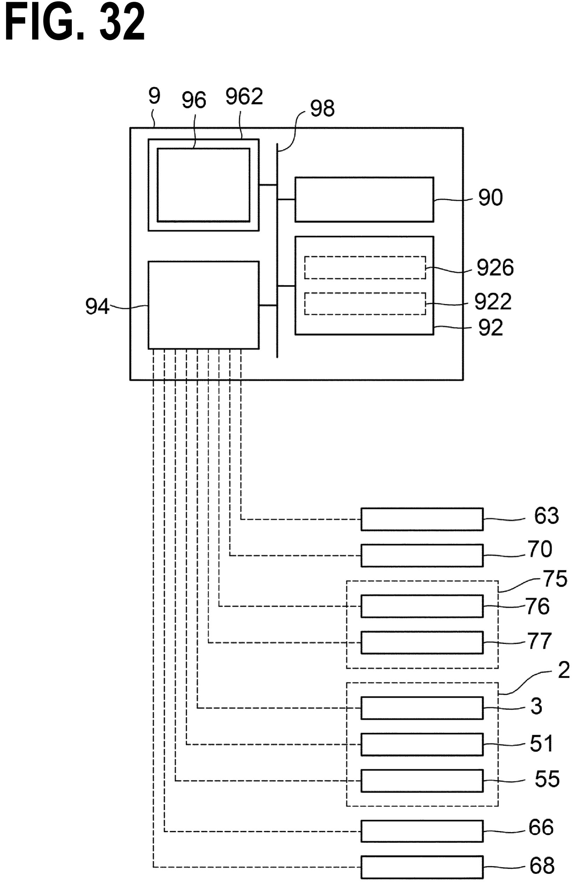

By referring to FIGs. 1 to 32, the laser beam machine 1 according to the fourth embodiment will be described. FIG. 28 is a schematic front view of the laser beam machine 1 according to the fourth embodiment. FIG. 29 is a cross-sectional view of the ejector 3, schematically illustrating a state in which the ejector 3 is ejecting the spatter adhesion inhibiting agent C1 to the leading end portion 31 of the spatter guard 30 and the inner surface Pn of the pipe P. FIGs. 30 and 31 each are a schematic front view of the laser beam machine 1 according to the fourth embodiment. FIG. 32 is a schematic illustration of a state in which the controller 9 is capable of controlling a plurality of control target instruments.

The following description of the fourth embodiment will mainly focus on those respects in which the fourth embodiment is different from the first embodiment, the second embodiment, and the third embodiment. In contrast, those respects already described in the first, second, or third embodiment will not be described in the fourth embodiment to avoid a repetition of description. Thus, it will be readily appreciated that those respects that are not explicitly described in the fourth embodiment but are described in the first, second, or third embodiment apply in the fourth embodiment. Conversely, all respects described in the fourth embodiment are applicable to the first embodiment, the second embodiment, and the third embodiment.

As exemplified in FIG. 28, the laser beam machine 1 according to the fourth embodiment includes a support 60, the rotational driver 63, a laser irradiator 70, a mover 75, the spatter adhesion inhibitor 2, and the controller 9.

The support 60 supports the pipe P. In the example illustrated in FIG. 28, the support 60 includes the first chuck 61. The first chuck 61 includes a gripper 64. The gripper 64 grips the pipe P. In the example illustrated in FIG. 28, the gripper 64 grips the second end portion Pb of the pipe P. The support 60 may include a second chuck 62. The second chuck 62 supports the pipe P. In the example illustrated in FIG. 28, the second chuck 62 supports an intermediate portion Pm of the pipe P.

The rotational driver 63 rotates the pipe P about the first axis AX. The rotational driver 63 may include a first rotational driver 63a. The first rotational driver 63a rotates the gripper 64 about the first axis AX. The rotational driver 63 may also include a second rotational driver 63b. The second rotational driver 63b rotates a plurality of guide rollers 67 of the second chuck 62 about the first axis AX.

The laser irradiator 70 includes the laser head 71. The laser head 71 irradiates the laser beam LB to the pipe P.

The mover 75 moves the laser head 71 relative to the pipe P. In the example illustrated in FIG. 28, the mover 75 moves the laser head 71 relative to the support 60 (more specifically, the first chuck 61 and the second chuck 62).

The spatter adhesion inhibitor 2 may be the spatter adhesion inhibitor 2A according to the first embodiment, the spatter adhesion inhibitor 2B according to the second embodiment (see FIG. 23), the spatter adhesion inhibitor 2C according to the third embodiment (see FIG. 26 or 27), or any other spatter adhesion inhibitor. The spatter adhesion inhibitors (2A, 2B, and 2C) have already been described in the first to third embodiments, and a description of the spatter adhesion inhibitors (2A, 2B, and 2C) will be omitted where otherwise a repetition of description occurs.

The spatter adhesion inhibitor 2 includes (1) the spatter guard 30, which includes the leading end portion 31, which is insertable into the pipe P through the first end portion Pa of the pipe P and receives spatter generated as a result of irradiation of a laser beam to the pipe P, (2) the spatter guard mover 51, which moves the spatter guard 30, (3) the blaster 36, which blasts fluid to the leading end portion 31 of the spatter guard 30, and (4) the ejector 3, which ejects the spatter adhesion inhibiting agent C1 to the leading end portion 31 of the spatter guard 30 and the inner surface Pn of the pipe P. The spatter guard 30, the spatter guard mover 51, the blaster 36, and the ejector 3 have already been described in the first to third embodiments, and a description of the spatter guard 30, the spatter guard mover 51, the blaster 36, and the ejector 3 will be omitted where otherwise a repetition of description occurs.

The controller 9 controls the rotational driver 63, the laser irradiator 70, the mover 75, and the spatter adhesion inhibitor 2.

The laser beam machine 1 according to the fourth embodiment provides effects similar to the effects provided by the spatter adhesion inhibitor 2A, according to the first embodiment, of the laser beam machine, the spatter adhesion inhibitor 2B, according to the second embodiment, of the laser beam machine, or the spatter adhesion inhibitor 2C, according to the third embodiment, of the laser beam machine.

### (Optional Configurations)

Next, by referring to FIGs. 1 to 32, optional configurations employable in the fourth embodiment (or the first embodiment, the second embodiment, or the third embodiment) will be described.

### (First Chuck 61)

In the example illustrated in FIG. 28, the first chuck 61 includes the gripper 64, the gripping jaw mover 66, and the first rotational driver 63a. The gripper 64 includes a plurality of gripping jaws 65.

The gripper 64 includes the plurality of gripping jaws 65. The plurality of gripping jaws 65 include a first gripping jaw 65a and a second gripping jaw 65b. The gripping jaw mover 66 is capable of moving the plurality of gripping jaws 65 in a direction toward the first axis AX, and capable of moving the plurality of gripping jaws 65 in a direction away from the first axis AX. More specifically, the gripping jaw mover 66 moves the plurality of gripping jaws 65 between a gripping position and a release position. The gripping position is where the plurality of gripping jaws 65 contact the pipe P. The release position is where the plurality of gripping jaws 65 are spaced apart from the pipe P.

The first rotational driver 63a rotates the gripper 64 (more specifically, the plurality of gripping jaws 65) about the first axis AX. In the example illustrated in FIG. 28, the first axis AX is substantially coaxial with the longitudinal center axis AT of the pipe P.

### (Second Chuck 62)

In the example illustrated in FIG. 28, the second chuck 62 includes the plurality of guide rollers 67, a guide roller mover 68, and the second rotational driver 63b. In the example illustrated in FIG. 28, the second chuck 62 is provided between the first chuck 61 and the laser head 71 in a direction along the first axis AX.

The plurality of guide rollers 67 guide the movement of the pipe P in a direction parallel to the first axis AX. The guide roller mover 68 is capable of moving the plurality of guide rollers 67 in a direction toward the first axis AX, and capable of moving the plurality of guide rollers 67 in a direction away from the first axis AX. More specifically, the guide roller mover 68 moves the plurality of guide rollers 67 between a contact position and a spaced position. The contact position is where the plurality of guide rollers 67 contact the pipe P. The spaced position is where the plurality of guide rollers 67 are spaced apart from the pipe P.

The second rotational driver 63b rotates the plurality of guide rollers 67 about the first axis AX.

### (Mover 75)

In the example illustrated in FIG. 28, the mover 75 includes a first chuck mover 76. The first chuck mover 76 moves the first chuck 61. The first chuck mover 76 moves the first chuck 61 in a direction substantially parallel to the first axis AX.

In the example illustrated in FIG. 28, the mover 75 includes a laser head mover 77. The laser head mover 77 moves the laser head 71. The laser head mover 77 may be a device capable of moving the laser head 71 two-dimensionally along a plane substantially perpendicular to the first axis AX. The laser head mover 77 may be a device capable of moving the laser head 71 three-dimensionally.

In the example illustrated in FIG. 28, the laser head mover 77 includes a first linear mover 77a. The first linear mover 77a moves the laser head 71 along the vertical direction. As exemplified in FIG. 28, the laser head mover 77 may include a second linear mover 77b. The second linear mover 77b moves the laser head 71 along the first axis AX. As exemplified in FIG. 28, the laser head mover 77 may include a third linear mover 77c. The third linear mover 77c moves the laser head 71 in a direction perpendicular to both the vertical direction and the first axis AX. The laser head mover 77 may also include a tilter that tilts the laser head 71 about a horizontal axis.

### (Laser Irradiator 70)

In the example illustrated in FIG. 28, the laser irradiator 70 includes the laser head 71. The laser head 71 emits laser. As exemplified in FIG. 12, the laser irradiator 70 (more specifically, the laser head 71) may include a assist gas blaster 72. The assist gas blaster 72 blasts assist gas G to a surface of the pipe P.

In the example illustrated in FIG. 12, the laser irradiator 70 simultaneously performs emission of the laser beam LB and spraying of the assist gas G. The assist gas G may be nitrogen gas or oxygen gas. Nitrogen gas as the assist gas G is supplied to the surface of the pipe P at a relatively high supply pressure. In contrast, oxygen gas as the assist gas G is supplied to the surface of the pipe P at a relatively low supply pressure to avoid an excessive level of oxidation reaction. In a case that nitrogen gas is used as the assist gas G, an oxidation coating film is less likely to form at a cut portion or a perforated portion the pipe P. In contrast, in a case that oxygen gas is used as the assist gas G, laser beam machining can be suitably performed to form a pipe P greater in thickness.

In a case that the assist gas blaster 72 blasts nitrogen gas to the surface of the pipe P, a part of the pipe material vaporized or melted as a result of irradiation of the laser beam LB is removed from the laser beam irradiated region by the nitrogen gas. In this case, the spatter B, which is generated from the pipe P, tends to form into fine particles. The fine particle spatter B generated from the pipe P is moved toward the leading end portion 31 of the spatter guard 30 by the nitrogen gas and weight. Then, the fine particle spatter B is blown off the leading end portion 31 of the spatter guard 30 by the fluid D blasted from the blaster 36.

In a case that the assist gas blaster 72 blasts oxygen gas to the surface of the pipe P, a part of the pipe material is melted by the input of the heat into the pipe P from the irradiation of the laser beam LB to the pipe P and by the reaction heat generated by the chemical reaction between the pipe material and oxygen. In this case, the spatter B, which is generated from the pipe P, tends to form into large particles. The large particle spatter B generated from the pipe P (for example, large particle spatter B in molten state) is moved toward the leading end portion 31 of the spatter guard 30 by the oxygen gas and weight. Then, the large particle spatter B is blown off the leading end portion 31 of the spatter guard 30 by the fluid D blasted from the blaster 36.

The laser irradiator 70 may be capable of switching the assist gas G sprayed from the assist gas blaster 72 between nitrogen gas and oxygen gas.

### (Extractor 55)

The laser beam machine 1 may include the extractor 55. The extractor 55 extracts the spatter B. In the example illustrated in FIG. 21, the extractor 55 extracts the spatter B to cause the spatter B to be discharged to outside the pipe P from the internal space SP2 of the pipe P through the second end portion Pb of the pipe P. By discharging the spatter B to outside the pipe P, adhesion of the spatter B to the inner surface Pn of the pipe P is inhibited.

As exemplified in FIG. 21, a spatter nozzle 56 of the extractor 55 may be provided at the first chuck 61. In a view from a direction along the third direction *DR3,* the spatter nozzle 56 may be provided between the first gripping jaw 65a and the second gripping jaw 65b. In the example illustrated in FIG. 21, when the first chuck 61 grips the second end portion Pb of the pipe P, the spatter nozzle 56 faces an opening of the second end portion Pb of the pipe P. In other words, when the first chuck 61 makes a motion of gripping the second end portion Pb of the pipe P, the spatter nozzle 56 and the opening of the second end portion Pb of the pipe P are automatically aligned.

### (Controller 9)

In the examples illustrated in FIGs. 28 and 30, the controller 9 controls the rotational driver 63 (more specifically, the first rotational driver 63a and the second rotational driver 63b), the laser irradiator 70, the mover 75 (more specifically, the first chuck mover 76 and the laser head mover 77), and the spatter adhesion inhibitor 2.

### (Spatter Adhesion Inhibiting Agent Ejection Mode M1)

In the example illustrated in FIG. 28, the controller 9 is capable of performing the spatter adhesion inhibiting agent ejection mode M1. In the spatter adhesion inhibiting agent ejection mode M1, the spatter adhesion inhibiting agent C1 is ejected to the leading end portion 31 of the spatter guard 30 and the inner surface Pn of the pipe P.

In the example illustrated in FIG. 28, the spatter adhesion inhibiting agent ejection mode M1 includes transmitting, from the controller 9, a control command E1 (more specifically, a first group of control commands E1) to at least the spatter adhesion inhibitor 2 to control the spatter adhesion inhibiting agent C1 to be ejected to the leading end portion 31 of the spatter guard 30 and the inner surface Pn of the pipe P.

The spatter adhesion inhibiting agent ejection mode M1 may include transmitting, from the controller 9, a first movement command E1-1 to the spatter guard mover 51 of the spatter adhesion inhibitor 2 to control the spatter guard 30 to move to the first position P1. In the example illustrated in FIG. 28, when the spatter guard 30 is located at the first position P1, the entire spatter guard 30 is positioned outside the pipe P. When the spatter guard 30 is located at the first position P1, the spatter adhesion inhibiting agent C1 can preferably be ejected from the blaster 36 of the spatter guard 30 to the end edge Pe of the inner surface Pn of the pipe P, which end edge Pe is located in the fourth direction *DR4,* (see, if necessary, FIG. 1).

In the example illustrated in FIG. 28, the spatter adhesion inhibiting agent ejection mode M1 includes transmitting, from the controller 9, a first ejection command E1-2 to the spatter adhesion inhibitor 2 (more specifically, the ejector 3) to control fluid (for example, oil air) containing the spatter adhesion inhibiting agent C1 to be ejected from the blaster 36 of the spatter guard 30 located at the first position P1 to both the leading end portion 31 of the spatter guard 30 and the inner surface Pn of the pipe P.

Additionally, the spatter adhesion inhibiting agent ejection mode M1 may include transmitting, from the controller 9, a first rotation command E1-3 to the rotational driver 63 (more specifically, the first rotational driver 63a and the second rotational driver 63b) to control the pipe P to rotate about the first axis AX. By simultaneously performing the ejection of the spatter adhesion inhibiting agent C1 to the inner surface Pn of the pipe P and the rotation of the pipe P about the first axis AX, the spatter adhesion inhibiting agent C1 can be applied efficiently over the entire inner surface Pn of the pipe P (see the arrow R1 illustrated in FIG. 15).

Alternatively or additionally, the spatter adhesion inhibiting agent ejection mode M1 may include transmitting, from the controller 9, an additional movement command E1-4 to at least one of the spatter guard mover 51 and the first chuck mover 76 to control the blaster 36 of the spatter guard 30 to move in a direction along the first axis AX relative to the pipe P. By performing the ejection of the spatter adhesion inhibiting agent C1 to the inner surface Pn of the pipe P and the movement of the blaster 36 of the spatter guard 30 in a direction along the first axis AX relative to the pipe P, the spatter adhesion inhibiting agent C1 can be applied over a wider range of the inner surface Pn of the pipe P (see arrow AR1 illustrated in FIG. 29). As exemplified in FIG. 29, when the spatter adhesion inhibiting agent ejection mode M1 is performed, it is possible to simultaneously perform the ejection of the fluid (for example, oil air) containing the spatter adhesion inhibiting agent C1 from the blaster 36, the rotation of the pipe P about the first axis AX, and the movement of the spatter guard 30 in a direction along the first axis AX.

### (First Machining Mode M2)

In the example illustrated in FIG. 30, the controller 9 is capable of performing the first machining mode M2. In the first machining mode M2, the laser beam LB is irradiated to the pipe P in a state in which the leading end portion 31 of the spatter guard 30 is inserted in the pipe P. In the example illustrated in FIG. 30, when the first machining mode M2 is performed, the leading end portion 31 of the spatter guard 30 is located on an axis of the laser beam LB emitted from the laser head 71 (in other words, on the optical axis of the laser beam LB).

In the example illustrated in FIG. 30, the first machining mode M2 includes transmitting, from the controller 9, a control command E2 (more specifically, a second group of control commands E2) to at least the laser irradiator 70 and the spatter adhesion inhibitor 2 to control the laser head 71 to irradiate the laser beam LB to the pipe P and control the spatter B to be blown off the leading end portion 31 of the spatter guard 30 to the inner surface Pn of the pipe P. Additionally, the first machining mode M2 may include transmitting a control command E2 to the extractor 55 to control the extractor 55 to extract the spatter B in the internal space SP2 of the pipe P.

The first machining mode M2 may include transmitting, from the controller 9, a second movement command E2-1 to the spatter guard mover 51 of the spatter adhesion inhibitor 2 to control the spatter guard 30 to move to the second position P2. When the spatter guard 30 is located at the second position P2, the leading end portion 31 of the spatter guard 30 is inserted in the pipe P.

In the example illustrated in FIG. 30, the first machining mode M2 includes (1) transmitting, from the controller 9, a laser beam emission command E2-2 to the laser irradiator 70 to control the laser head 71 to irradiate the laser beam LB to the pipe P, and (2) transmitting, from the controller 9, a second ejection command E2-3 to the spatter adhesion inhibitor 2 (more specifically, the ejector 3)to control the blaster 36 of the spatter guard 30 located at the second position P2 to eject the fluid D (for example, the gas D1, such as air, or the fluid mixture D2, which contains the spatter adhesion inhibiting agent C1 and the gas D1) to the leading end portion 31 of the spatter guard 30.

Additionally, as exemplified in FIG. 30, the first machining mode M2 may include transmitting, from the controller 9, a second rotation command E2-4 to the rotational driver 63 (more specifically, the first rotational driver 63a and the second rotational driver 63b) to control the pipe P to rotate about the first axis AX. In other words, in the first machining mode M2, it is possible to simultaneously perform the irradiation of the laser beam LB to the pipe P, the rotation of the pipe P about the first axis AX, and the ejection of the fluid D (for example, the gas D1, such as air, or the fluid mixture D2, which contains the spatter adhesion inhibiting agent C1 and the gas D1) to the leading end portion 31 of the spatter guard 30.

Alternatively or additionally, as exemplified in FIG. 30, the first machining mode M2 may include transmitting, from the controller 9, a third movement command E2-5 to the mover 75 (for example, the first chuck mover 76 and/or the laser head mover 77) to control the laser head 71 to move relative to the pipe P. In other words, in the first machining mode M2, it is possible to simultaneously perform the irradiation of the laser beam LB to the pipe P, the movement of the laser head 71 relative to the pipe P, and the ejection of the fluid D (for example, the gas D1, such as air, or the fluid mixture D2, which contains the spatter adhesion inhibiting agent C1 and the gas D1) to the leading end portion 31 of the spatter guard 30.

Alternatively or additionally, as exemplified in FIG. 30, the first machining mode M2 may include transmitting, from the controller 9, an extraction command E2-6 to the extractor 55 to control the extractor 55 to extract the spatter B in the internal space SP2 of the pipe P. In other words, in the first machining mode M2, it is possible to simultaneously perform the irradiation of the laser beam LB to the pipe P, the ejection of the fluid D (for example, the gas D1, such as air, or the fluid mixture D2, which contains the spatter adhesion inhibiting agent C1 and the gas D1) to the leading end portion 31 of the spatter guard 30, the extraction of the spatter B from the internal space SP2 of the pipe P to the extractor 55.

In the examples illustrated in FIGs. 28 and 30, the controller 9 is capable of sequentially performing the spatter adhesion inhibiting agent ejection mode M1 and the first machining mode M2. More specifically, the controller 9 performs the spatter adhesion inhibiting agent ejection mode M1, and then performs the first machining mode M2.

### (Second Machining Mode M3)

In the example illustrated in FIG. 31, the controller 9 is capable of performing a second machining mode M3. In the second machining mode M3, the laser beam LB is irradiated to the pipe P without insertion of the leading end portion 31 of the spatter guard 30 into the pipe P. In the example illustrated in FIG. 31, when the second machining mode M3 is performed, the leading end portion 31 of the spatter guard 30 is located at a position withdrawn from the axis of the laser beam LB emitted from the laser head 71.

The controller 9 may be capable of sequentially performing the spatter adhesion inhibiting agent ejection mode M1 and the second machining mode M3. In this case, the spatter guard 30 is not inserted into the pipe P. Since, however, the spatter adhesion inhibiting agent is attached to the inner surface Pn of the pipe P, adhesion of spatter to the inner surface Pn of the pipe P is inhibited.

In the examples illustrated in FIGs. 28, 30, and 31, the controller 9 is capable of selectively performing the spatter adhesion inhibiting agent ejection mode M1, the first machining mode M2, and the second machining mode M3.

The controller 9 may be implemented by a single computer or a plurality of computers. As exemplified in FIG. 32, the controller 9 includes a hardware processor 90 (hereinafter simply referred to as "processor 90"), a memory 92, a communication circuit 94, and an input device 96 (for example, a touch panel-equipped display 962). The processor 90, the memory 92, the communication circuit 94, and the input device 96 are connected to each other via a bus 98. The data necessary for machining the pipe P (for example, workpiece data 926, which includes data associated with the shape of the pipe P and machining position data associated with the pipe P) may be input into the controller 9 via the input device 96, or may be input into the controller 9 from another computer via the communication circuit 94. It is to be noted that the input device 96 will not be limited to the touch panel-equipped display 962. For example, the controller 9 may include: the input device 96, such as a button, a switch, a lever, a pointing device, and a keyboard; and a display that displays the data input into the input device 96 or other information.

The controller 9 executes a machining program 922, which is stored in the memory 92, to generate a plurality of control commands (for example, the first group of control commands E1 and the second group of control commands E2). The communication circuit 94 transmits the plurality of control commands generated by the controller 9 to a plurality of control target instruments (for example, the rotational driver 63, the laser irradiator 70, the mover 75, the spatter adhesion inhibitor 2, the gripping jaw mover 66, and the guide roller mover 68). Thus, the controller 9 is capable of controlling the plurality of control target instruments.

### (Fifth Embodiment)

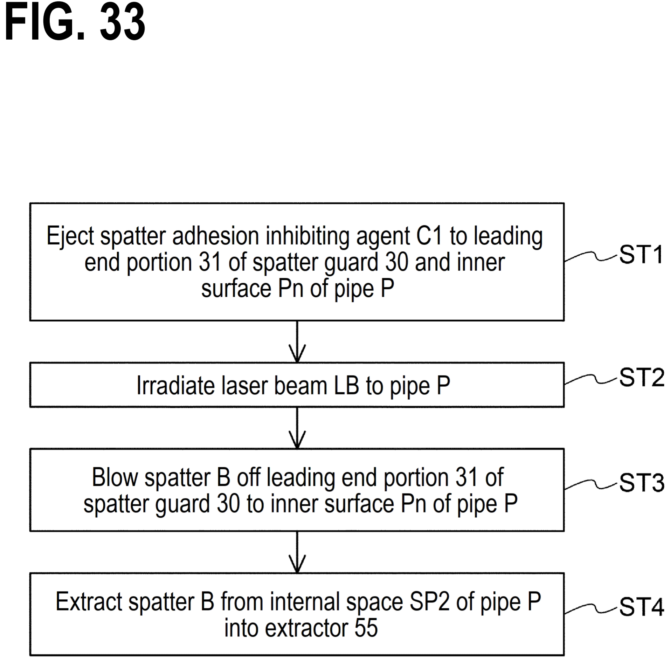

By referring to FIGs. 1 to 33, a laser beam machining method according to an embodiment will be described. FIG. 33 is a flowchart of an example of a laser beam machining method according to the fifth embodiment.

The laser beam machine 1 used in the laser beam machining method according to the fifth embodiment may be the laser beam machine 1 according to the fourth embodiment or another laser beam machine. The components of the laser beam machine 1 have already been described in the first to fourth embodiments, and a description of the components of the laser beam machine 1 will be omitted where otherwise a repetition of description occurs.

At first step ST1, the spatter adhesion inhibiting agent C1 is ejected to the leading end portion 31 of the spatter guard 30 and the inner surface Pn of the pipe P. First step ST1 is a spatter adhesion inhibiting agent ejecting step.

In the examples illustrated in FIGs. 1, 4, 7, 15, 16, 17, 18, 27, 28, and 29, the ejection of the spatter adhesion inhibiting agent C1 to the leading end portion 31 of the spatter guard 30 and the ejection of the spatter adhesion inhibiting agent C1 to the inner surface Pn of the pipe P are performed simultaneously. In contrast, in the examples illustrated in FIGs. 23, 24, and 26, the ejection of the spatter adhesion inhibiting agent C1 to the leading end portion 31 of the spatter guard 30 and the ejection of the spatter adhesion inhibiting agent C1 to the inner surface Pn of the pipe P are performed at different timings.

As exemplified in FIGs. 1, 4, 7, 15, 16, 17, 18, 28, and 29, the spatter adhesion inhibiting agent ejecting step (first step ST1) may include spraying fluid containing the spatter adhesion inhibiting agent C1 (for example, oil air containing oil and air) to both the leading end portion 31 of the spatter guard 30 and the inner surface Pn of the pipe P from the blaster 36 of the spatter guard 30. In the examples illustrated in FIGs. 1, 4, 7, 15, 16, 17, 18, and 28, the spatter adhesion inhibiting agent ejecting step (first step ST1) includes spraying the fluid containing the spatter adhesion inhibiting agent C1 (for example, oil air containing oil and air) to both the leading end portion 31 of the spatter guard 30 and the inner surface Pn of the pipe P from the blaster 36 positioned outside the pipe P. Alternatively or additionally, as exemplified in FIG. 29, the spatter adhesion inhibiting agent ejecting step (first step ST1) may include spraying the fluid containing the spatter adhesion inhibiting agent C1 (for example, oil air containing oil and air) to both the leading end portion 31 of the spatter guard 30 and the inner surface Pn of the pipe P from the blaster 36 positioned inside the pipe P.

As exemplified in FIGs. 15, 16, 26, 28, and 29, the spatter adhesion inhibiting agent ejecting step (first step ST1) may include rotating the pipe P about a center axis of the longitudinal direction of the pipe P in a state in which the spatter adhesion inhibiting agent C1 is being ejected (more specifically, in a state in which the spatter adhesion inhibiting agent C1 is being ejected from the blaster 36 of the spatter guard 30 or the nozzle 301).

In this case, the spatter adhesion inhibiting agent C1 can be applied efficiently over the entire inner surface Pn of the pipe P.

In the examples illustrated in FIGs. 15, 16, 28, and 29, the spatter adhesion inhibiting agent ejecting step (first step ST1) includes, while rotating the pipe P about the first axis AX, spraying the fluid mixture D2, which contains gas and the spatter adhesion inhibiting agent C1 (for example, oil air containing oil and air) to the inner surface Pn of the pipe P from the blaster 36 of the spatter guard 30.

As exemplified in FIG. 1, the spatter adhesion inhibiting agent ejecting step (first step ST1) may include ejecting the spatter adhesion inhibiting agent C1 to the end edge Pe of the inner surface Pn of the pipe P, which end edge Pe is located in the fourth direction *DR4.*

At second step ST2, the laser beam LB is irradiated to the pipe P. Second step ST2 is a laser beam irradiation step. By radiating the laser beam LB to the pipe P, the pipe P is machined. By radiating the laser beam LB to the pipe P, a through hole with any desired shape may be formed in the pipe P. Alternatively or additionally, by radiating the laser beam LB to the pipe P, a slit may be formed on the pipe P. Alternatively or additionally, by radiating the laser beam LB to the pipe P, the pipe P may be divided into a first pipe and a second pipe.

In the examples illustrated in FIGs. 2, 3, 5, 6, 8, 12, 13, 14, 19, 20, 21, 25, and 30, the laser beam irradiation step (second step ST2) is performed in a state in which the leading end portion 31 of the spatter guard 30 is inserted in the pipe P.

The laser beam irradiation step (in other words, radiating the laser beam LB to the pipe P in a state in which the leading end portion 31 of the spatter guard 30 is inserted in the pipe P) and rotating the pipe P about the first axis AX may be performed simultaneously. Alternatively or additionally, the laser beam irradiation step (in other words, radiating the laser beam LB to the pipe P in a state in which the leading end portion 31 of the spatter guard 30 is inserted in the pipe P) and moving the pipe P in a direction along the first axis AX may be performed simultaneously. Alternatively or additionally, the laser beam irradiation step (in other words, radiating the laser beam LB to the pipe P in a state in which the leading end portion 31 of the spatter guard 30 is inserted in the pipe P) and moving the laser head 71 may be performed simultaneously.

The spatter adhesion inhibiting agent ejecting step (first step ST1) is preferably performed before the laser beam irradiation step (second step ST2) is performed. The spatter adhesion inhibiting agent ejecting step (first step ST1) and the laser beam irradiation step (second step ST2) may be performed alternately. For example, prior to laser beam machining of a first portion of the pipe P, the spatter adhesion inhibiting agent C1 may be ejected to an inner surface of the first portion. Additionally, after the laser beam machining of the first portion of the pipe P and before laser beam machining of a second portion of the pipe P, the spatter adhesion inhibiting agent C1 may be ejected to an inner surface of the second portion. Further afterward, the second portion of the pipe P may be laser beam machined.

By performing the laser beam irradiation step (second step ST2), spatter B is generated from the pipe P. The spatter B is received by the leading end portion 31 of the spatter guard 30.

At third step ST3, the spatter B, which is generated as a result of irradiation of the laser beam LB to the pipe P, is blown off the leading end portion 31 of the spatter guard 30 to the inner surface Pn of the pipe P. Third step ST3 is a blow-off step.

In the examples illustrated in FIGs. 2, 3, 5, 6, 8, 12, 13, 14, 19, 20, 21, 25, and 30, the blow-off step (in other words, a step of blowing off the spatter B) is performed by spraying the fluid D (for example, the gas D1, such as air, or the fluid mixture D2, which contains the spatter adhesion inhibiting agent C1 and the gas D1) to the leading end portion 31 of the spatter guard 30 from the blaster 36 of the spatter guard 30.

In the blow-off step (third step ST3), the type of the fluid D blasted from the blaster 36 of the spatter guard 30 may be different from the type of the fluid D blasted from the blaster 36 of the spatter guard 30 in the spatter adhesion inhibiting agent ejecting step (first step ST1). For example, in the blow-off step (third step ST3), the fluid D blasted from the blaster 36 of the spatter guard 30 is gas (for example, air) with no spatter adhesion inhibiting agent content, whereas the fluid D blasted from the blaster 36 of the spatter guard 30 in the spatter adhesion inhibiting agent ejecting step (first step ST1) is fluid containing the spatter adhesion inhibiting agent C1 (for example, oil air).

Alternatively or additionally, in the blow-off step (third step ST3), the ratio of the spatter adhesion inhibiting agent C1 to the fluid D blasted from the blaster 36 of the spatter guard 30 may be lower than the ratio of the spatter adhesion inhibiting agent C1 to the fluid D blasted from the blaster 36 of the spatter guard 30 in the spatter adhesion inhibiting agent ejecting step (first step ST1).

In the blow-off step (third step ST3), in a case that the ratio of the spatter adhesion inhibiting agent C1 to the fluid D blasted from the blaster 36 of the spatter guard 30 low or zero, the amount of consumption of the spatter adhesion inhibiting agent C1 can be reduced. In a case that the spatter B is collected by the extractor 55, the amount of the spatter adhesion inhibiting agent C1 (for example, oil) collected by the extractor 55 can be reduced. This configuration reduces the negative influence of the spatter adhesion inhibiting agent C1 (for example, oil) on the extractor 55, lowering the likelihood of failure of the extractor 55.

The blow-off step (in other words, spraying the fluid D to the leading end portion 31 of the spatter guard 30 from the blaster 36 of the spatter guard 30) is preferably performed simultaneously with the laser beam irradiation step (in other words, radiating the laser beam LB to the pipe P in a state in which the leading end portion 31 of the spatter guard 30 is inserted in the pipe P).

While the laser beam irradiation step (in other words, radiating the laser beam LB to the pipe P in a state in which the leading end portion 31 of the spatter guard 30 is inserted in the pipe P) is being performed, the fluid D (for example, the gas D1, such as air, or the fluid mixture D2, which contains the spatter adhesion inhibiting agent C1 and the gas D1) may be continually ejected to the leading end portion 31 of the spatter guard 30 from the blaster 36 of the spatter guard 30. Alternatively, while the laser beam irradiation step (in other words, radiating the laser beam LB to the pipe P in a state in which the leading end portion 31 of the spatter guard 30 is inserted in the pipe P) is being performed, the fluid D (for example, the gas D1, such as air, or the fluid mixture D2, which contains the spatter adhesion inhibiting agent C1 and the gas D1) may be intermittently ejected to the leading end portion 31 of the spatter guard 30 from the blaster 36 of the spatter guard 30.

The laser beam machining method according to the fifth embodiment may include an extraction step of extracting the spatter B. More specifically, as exemplified in FIG. 21, at fourth step ST4, the spatter B is extracted from the internal space SP2 of the pipe P into the extractor 55 (extraction step). By discharging the spatter B to outside the pipe P, adhesion of the spatter B to the inner surface Pn of the pipe P is inhibited.

In the example illustrated in FIG. 21, in the extraction step (fourth step ST4), the spatter B is extracted by the extractor 55 so that the spatter B is discharged to outside the pipe P through the second end portion Pb of the pipe P.

The extraction step (in other words, extracting, using the extractor 55, the spatter B from the internal space SP2 of the pipe P) is preferably performed simultaneously with the blow-off step (in other words, spraying the fluid D to the leading end portion 31 of the spatter guard 30 from the blaster 36 of the spatter guard 30). In the example illustrated in FIG. 21, blowing the spatter B off the leading end portion 31 of the spatter guard 30 to the inner surface Pn of the pipe P using the fluid D blasted from the blaster 36 of the spatter guard 30 (an example of the fluid D is the gas D1, such as air, or the fluid mixture D2, which contains the spatter adhesion inhibiting agent C1 and the gas D1) is performed simultaneously with extracting the spatter B to the extractor 55 from the internal space SP2 of the pipe P through the second end portion Pb of the pipe P.

In the example illustrated in FIG. 21, the extraction step (fourth step ST4) includes: extracting the spatter B in the third direction *DR3*; and extracting, in the third direction *DR3,* the spatter adhesion inhibiting agent C1 (for example, oil) adhered to the inner surface Pn of the pipe P. In this case, the spatter adhesion inhibiting agent C1 ejected to the inner surface of the first end portion Pa of the pipe P is diffused in the third direction *DR3* (see the dashed arrows illustrated in FIG. 21).

The extraction step (fourth step ST4) is preferably performed simultaneously with the laser beam irradiation step (second step ST2). The extraction step (fourth step ST4) may be started ahead of the laser beam irradiation step (second step ST2). In this case, the spatter adhesion inhibiting agent C1 ejected to the inner surface of the first end portion Pa of the pipe P is diffused in the third direction *DR3* ahead of the laser beam machining of the pipe P.

In the laser beam machining method according to the fifth embodiment, the laser beam LB is irradiated to the pipe P in a state in which the leading end portion 31 of the spatter guard 30 is inserted in the pipe P. This configuration ensures that the spatter B scattering from the pipe P during the laser beam machining of the pipe P is received by the leading end portion 31 of the spatter guard 30, inhibiting adhesion of the spatter B to the inner surface Pn of the pipe P.

In the laser beam machining method according to the fifth embodiment, the spatter adhesion inhibiting agent C1 is ejected to the leading end portion 31 of the spatter guard 30 and the inner surface Pn of the pipe P.

Since the spatter adhesion inhibiting agent C1 is ejected to the leading end portion 31 of the spatter guard 30, adhesion of the spatter B, which scatters from the pipe P during the laser beam machining of the pipe P, to the leading end portion 31 of the spatter guard 30 is inhibited. More specifically, even though the spatter B scattering from the pipe P is received by the leading end portion 31 of the spatter guard 30, the spatter adhesion inhibiting agent C1 inhibits adhesion of the spatter B to the leading end portion 31 when the spatter B is received by the leading end portion 31.

In the laser beam machining method according to the fifth embodiment, the spatter B is blown off the leading end portion 31 of the spatter guard 30 to the inner surface Pn of the pipe P by the fluid D ejected to the leading end portion 31 of the spatter guard 30. This configuration inhibits accumulation of the spatter B on the leading end portion 31 of the spatter guard 30.

Additionally, the spatter adhesion inhibiting agent C1 is applied to the inner surface Pn of the pipe P. This configuration prevents the spatter B that is being blown off the leading end portion 31 of the spatter guard 30 to the inner surface Pn of the pipe P from adhering to the inner surface Pn of the pipe P. More specifically, even though the spatter B that is being blown off the leading end portion 31 of the spatter guard 30 is received by the inner surface Pn of the pipe P, the spatter adhesion inhibiting agent C1 inhibits adhesion of the spatter B to the inner surface Pn when the spatter B is received by the inner surface Pn.

The present invention will not be limited to the above-described and/or modifications; it will be appreciated that the embodiments may be modified or changed in any manner deemed convenient within the technical spirit and scope of the present invention. Also, the various techniques used in each of the embodiments and/or modifications are applicable in other embodiments and/or modifications insofar as no technical contradiction occurs. Further, the optional configurations in the embodiments and/or modifications may be omitted in any manner deemed convenient.

### Reference Signs List

1 ... Laser beam machine, 2, 2A, 2B, 2C ... Spatter adhesion inhibitor, 3 ... Ejector, 3a ... First ejector, 3b ... Second ejector, 9 ... Controller, 12 ... Component of laser beam machine, 12a ... Air cylinder, 30 ... Spatter guard, 30-2 ... Second spatter guard, 30d ... Base end portion, 30e ... Leading end portion, 31 ... Leading end portion, 31u ... Upper surface, 35 ... Intermediate portion, 36 ... Blaster, 36h ... Blast hole, 36j ... Auxiliary blast hole, 38 ... Base end portion, 38v ... Fluid passage, 41 ... Mixer, 41a ... Lubricator, 42 ... Tank, 43 ... Pump, 44 ... Air supply tube, 45a ... First fluid passage, 45b ... Second fluid passage, 45c ... Common fluid passage, 45e ... Third fluid passage, 46a ... First supplier, 46b ... Second supplier, 47a ... First tube, 47a-2 ... Tube different from first tube, 47b ... Second tube, 48 ... Connector, 49a ... First open-close valve, 49b ... First flow control valve, 49c ... Second open-close valve, 49d ... Second flow control valve, 49e ... Third open-close valve, 51 ... Spatter guard mover, 51a ... First driver, 51b ... Second driver, 52a ... First slider, 52b ... Second slider, 54 ... Guide roller, 55 ... Extractor, 56 ... Spatter nozzle, 57 ... Cleaner, 57b ... Brush, 60 ... Support, 61 ... First chuck, 62 ... Second chuck, 63... rotational driver, 63a ... First rotational driver, 63b ... Second rotational driver, 64 ... Gripper, 65 ... Gripping jaw, 65a ... First gripping jaw, 65b ... Second gripping jaw, 66 ... Gripping jaw mover, 67 ... Guide roller, 68 ... Guide roller mover, 70 ... Laser irradiator, 71 ... Laser head, 72 ... Assist gas blaster, 75 ... Mover, 76 ... First chuck mover, 77 ... Laser head mover, 77a ... First linear mover, 77b ... Second linear mover, 77c ... Third linear mover, 90 ... Hardware processor, 92 ... Memory, 94 ... Communication circuit, 96 ... Input device, 98 ... Bus, 301 ... Nozzle, 302 ... Nozzle support, 320n ... Inner surface, 321 ... Bottom wall, 321u ... Upper surface, 323 ... First side wall, 323e ... Upper edge, 323n ... First side surface, 325 ... Second side wall, 325e ... Upper edge, 325n ... Second side surface, 360 ... Outlet, 360u ... Upper end, 360w ... Lower end, 922 ... Machining program, 926 ... Workpiece data, 962 ... Touch panel-equipped display, AS ... Air source, AT ... Longitudinal center axis of pipe, AX ... First axis, B ... Spatter, C 1 ... Spatter adhesion inhibiting agent, D ... Fluid, D 1 ... Gas, D2 ... Fluid mixture, *DR1* ... First direction, *DR2* ... Second direction, *DR3* ... Third direction, *DR4* ... Fourth direction, *DR5* ... Fifth direction, *DR6* ... Sixth direction, E1 ... Control command, E1-1 ... First movement command, E1-2 ... First ejection command, E1-3 ... First rotation command, E1-4 ... Movement command, E2 ... Control command, E2-1 ... Second movement command, E2-2 ... Laser beam emission command, E2-3 ... Second ejection command, E2-4 ... Second rotation command, E2-5 ... Third movement command, E2-6 ... Extraction command, G ... Assist gas, LB ... Laser, M1 ... Spatter adhesion inhibiting agent ejection mode, M2 ... First machining mode, M3 ... Second machining mode, N1 ... Fluid mixture supply mode, N2 ... Gas supply mode, OP ... Opening, P ... Pipe, P1 ... First position, P2 ... Second position, P3 ... Third position, Pa ... First end portion, Pb ... Second end portion, Pe ... End edge in fourth direction of inner surface of pipe, Pm ... Intermediate portion, Pn ... Inner surface, SP1 ... Elongated space, SP2 ... Internal space

## Claims

1. A spatter adhesion inhibitor of a laser beam machine, the spatter adhesion inhibitor comprising:
a spatter guard comprising a leading end portion that is insertable into a pipe and that is configured to receive spatter generated as a result of irradiation of a laser beam to the pipe;
a blaster configured to blast fluid to the leading end portion of the spatter guard; and
an ejector configured to eject a spatter adhesion inhibiting agent to the leading end portion of the spatter guard and an inner surface of the pipe.

2. The spatter adhesion inhibitor of the laser beam machine, according to claim 1,
wherein the ejector comprises a first fluid passage through which a fluid mixture of gas and the spatter adhesion inhibiting agent is supplied to the blaster, and
wherein the ejector is configured to eject the fluid mixture from the blaster to the inner surface of the pipe.

3. The spatter adhesion inhibitor of the laser beam machine, according to claim 2, wherein the ejector is configured to adjust a ratio of the spatter adhesion inhibiting agent to the fluid mixture blasted from the blaster.

4. The spatter adhesion inhibitor of the laser beam machine, according to claim 2 or 3, wherein the ejector comprises a second fluid passage through which the gas is supplied to the blaster.

5. The spatter adhesion inhibitor of the laser beam machine, according to claim 4, wherein the ejector comprises
a first open-close valve configured to open and close the first fluid passage, and
a second open-close valve configured to open and close the second fluid passage.

6. The spatter adhesion inhibitor of the laser beam machine, according to any one of claims 2 to 5, wherein in a state in which the blaster is positioned outside the pipe, the ejector is configured to eject the fluid mixture to the inner surface of the pipe.

7. The spatter adhesion inhibitor of the laser beam machine, according to claim 1, wherein the ejector is configured to selectively perform
a gas supply mode in which the ejector is configured to supply only gas to the blaster, and
a fluid mixture supply mode in which the ejector is configured to supply a fluid mixture of the gas and the spatter adhesion inhibiting agent to the blaster.

8. The spatter adhesion inhibitor of the laser beam machine, according to any one of claims 2 to 7, wherein the ejector comprises a lubricator configured to mix the gas with the spatter adhesion inhibiting agent.

9. The spatter adhesion inhibitor of the laser beam machine, according to any one of claims 1 to 8, wherein the blaster is provided at the spatter guard.

10. The spatter adhesion inhibitor of the laser beam machine, according to any one of claims 1 to 9,
wherein the leading end portion of the spatter guard comprises
a bottom wall,
a first side wall, and
a second side wall facing the first side wall,
wherein a direction from a base end of the spatter guard toward a leading end of the spatter guard is defined as a first direction,
wherein an elongated space extending in the first direction is defined by the bottom wall, the first side wall, and the second side wall, and
wherein the blaster is configured to blast the fluid to the elongated space.

11. A laser beam machine comprising:
a support configured to support a pipe;
a rotational driver configured to rotate the pipe about a first axis;
a laser irradiator comprising a laser head configured to irradiate a laser beam to the pipe;
a mover configured to move the laser head relative to the pipe;
a spatter adhesion inhibitor; and
a controller configured to control the rotational driver, the laser irradiator, the mover, and the spatter adhesion inhibitor,
the spatter adhesion inhibitor comprising:
a spatter guard comprising a leading end portion that is insertable into the pipe through a first end portion of the pipe and that is configured to receive spatter generated as a result of irradiation of the laser beam to the pipe;
a spatter guard mover configured to move the spatter guard;
a blaster configured to blast fluid to the leading end portion of the spatter guard; and
an ejector configured to eject a spatter adhesion inhibiting agent to the leading end portion of the spatter guard and an inner surface of the pipe.

12. The laser beam machine according to claim 11, further comprising an extractor configured to extract the spatter from an internal space of the pipe and discharge the extracted spatter to outside the pipe through a second end portion of the pipe.

13. The laser beam machine according to claim 11 or 12,
wherein the controller is configured to perform
a spatter adhesion inhibiting agent ejection mode, and
a first machining mode,
wherein the spatter adhesion inhibiting agent ejection mode comprises transmitting a control command from the controller to at least the spatter adhesion inhibitor to control the spatter adhesion inhibitor to eject the spatter adhesion inhibiting agent to the leading end portion of the spatter guard and the inner surface of the pipe, and
wherein the first machining mode comprises transmitting a control command from the controller to at least the laser irradiator and the spatter adhesion inhibitor to control the laser beam to be irradiated from the laser head to the pipe and control the spatter to be blown off from the leading end portion of the spatter guard to the inner surface of the pipe.

14. A laser beam machining method comprising:
a step of ejecting a spatter adhesion inhibiting agent to a leading end portion of a spatter guard and an inner surface of a pipe;
a step of radiating a laser beam to the pipe in a state in which the leading end portion of the spatter guard is inserted in the pipe; and
a step of blowing off spatter, generated as a result of irradiation of the laser beam to the pipe, from the leading end portion of the spatter guard to an inner surface of the pipe,
wherein the step of blowing off the spatter is performed by blasting fluid from a blaster of the spatter guard to the leading end portion of the spatter guard.

15. The laser beam machining method according to claim 14, wherein the step of ejecting the spatter adhesion inhibiting agent comprises rotating the pipe about a center axis extending in a longitudinal direction of the pipe in a state in which the spatter adhesion inhibiting agent is being ejected.
